(19) Europäisches Patentamt
European Patent Office
Office européen des brevets

(11) **EP 3 564 111 B1**

(12) **EUROPEAN PATENT SPECIFICATION**

(45) Date of publication and mention
of the grant of the patent:
**10.07.2024   Bulletin 2024/28**

(21) Application number: **17888447.4**

(22) Date of filing: **21.09.2017**

(51) International Patent Classification (IPC):
**B60L 15/20** *(2006.01)*     **B62M 6/45** *(2010.01)*
**B60L 50/20** *(2019.01)*

(52) Cooperative Patent Classification (CPC):
**B60L 15/2045; B60L 50/20; B62M 6/45;**
B60L 2200/12; B60L 2240/16; B60L 2240/423;
Y02T 10/64; Y02T 10/72

(86) International application number:
**PCT/JP2017/034147**

(87) International publication number:
**WO 2018/123161 (05.07.2018 Gazette 2018/27)**

(54) **ELECTRIC ASSISTANCE SYSTEM AND ELECTRICALLY ASSISTED VEHICLE**

ELEKTRISCHES UNTERSTÜTZUNGSSYSTEM UND ELEKTRISCH UNTERSTÜTZTES FAHRZEUG

SYSTÈME D'ASSISTANCE ÉLECTRIQUE ET VÉHICULE À ASSISTANCE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **28.12.2016   JP 2016255871**

(43) Date of publication of application:
**06.11.2019   Bulletin 2019/45**

(73) Proprietor: **Yamaha Hatsudoki Kabushiki Kaisha
Iwata-shi, Shizuoka 438-8501 (JP)**

(72) Inventor: **HASUMI Mitsuharu
Iwata-shi
Shizuoka 438-8501 (JP)**

(74) Representative: **Grünecker Patent- und
Rechtsanwälte
PartG mbB
Leopoldstraße 4
80802 München (DE)**

(56) References cited:
**EP-A1- 2 711 285          EP-A2- 1 129 932
EP-B1- 0 926 059          WO-A1-2015/128239
DE-A1- 102014 219 595     JP-A- 2004 025 913
JP-A- 2016 150 684        US-A1- 2014 081 494
US-B1- 6 545 437          US-B2- 8 874 296**

Remarks:
The file contains technical information submitted after the application was filed and not included in this specification

## Description

The present invention relates to an electric assist system usable for an electric assist vehicle, and an electric assist vehicle including the electric assist system.

## BACKGROUND ART

Prior art document EP 2 711 285 A1 discloses an electric bicycle and a control method thereof. The control method of the electric bicycle in which a motor is rotated using electric energy stored in a battery to drive the electric bicycle, includes receiving an acceleration instruction value to accelerate the electric bicycle, input by a driver, during traveling, calculating a reference value according to a traveling velocity of the electric bicycle, and increasing time taken for a rotating velocity of the motor to reach a target velocity, if the received acceleration instruction value is more than the calculated reference value. In particular, an electronic control unit receives an acceleration instruction value input by the driver according to the pedal torque sensed by a pedal torque sensing unit.

Prior art document EP 0 926 059 A2 discloses an electric assist system usable for an electric assist vehicle including a pedal, corresponding to the preamble of claim 1.

The electric assist system comprises a crankshaft rotatable by human power of a rider applied to the pedal and a torque sensor outputting a torque signal in accordance with a magnitude of a torque generated at the crankshaft. An electric motor is used to generate assist power assisting the human power of the rider. An acceleration detection unit is provided for outputting an acceleration signal in accordance with a current acceleration in a travel direction of the electric assist vehicle. A control device receives the torque signal and the acceleration signal and determines a magnitude of the assist power to be generated by the electric motor. The control device calculates a acceleration in the reference environment from the torque signal based on a rule prepared in advance, and determines the magnitude of the assist power to be generated by the electric motor. In particular, the human drive force detected by a human drive power detection unit pulsates in response to the rotation of the pedal crank. The period of the pulsation is inversely proportional to the rotation speed of the pedal crank. For this reason, when the pulsating human drive force is used, the assist ratio is changed frequently, whereby the ride comfort of the vehicle may be lowered. To solve this problem, it may be possible to have a configuration wherein the human drive power detection unit calculates the average value of a plurality of continuously detected human drive force values, and outputs the average value to the acceleration calculation unit and the assist ratio determination unit.

An electric assist bicycle, by which power of a rider pedaling the bicycle is assisted by an electric motor, is known. In such an electric assist bicycle, assist power in accordance with human power applied by the rider to a pedal is generated by the electric motor, and a motive power as a sum of the human power and the assist power is transmitted to a driving wheel. The human power may be assisted by the electric motor, so that the burden on the rider is alleviated (e.g., Patent Document No. 1).

## CITATION LIST

### PATENT LITERATURE

Patent Document No. 1: Japanese Laid-Open Patent Publication No. 09-226664

The rider pedals an electric assist bicycle, and as a result, the electric assist bicycle is accelerated, runs at a constant speed, or is decelerated.

In the case where the human power applied to the pedal of the electric assist bicycle is kept the same, as the load on the vehicle is increased, the change ratio (acceleration) of the vehicle speed is decreased. For example, in the case where the human power applied to the pedal is kept the same, the change ratio (acceleration) of the vehicle speed is lower while the vehicle is running on a slope than while the vehicle is running on a flat road. The rider may feel inconvenient that the change ratio (acceleration) of the vehicle speed changes despite that the rider keeps on rotating the pedal with the same force.

It is the object of the present invention to provide an electric assist system generating an appropriate magnitude of assist power in accordance with a load while an electric assist vehicle is running, and an electric assist vehicle including the electric assist system. According to the present invention said object is solved by an electric assist system according to the independent claim 1. Preferred embodiments are laid down in the dependent claims.

An electric assist system according to the present invention is an electric assist system usable for an electric assist vehicle including a pedal. The electric assist system includes a crankshaft rotatable by human power of a rider applied to the pedal; a torque sensor outputting a torque signal in accordance with a magnitude of a torque generated at the crankshaft; an electric motor generating assist power assisting the human power of the rider; an acceleration sensor outputting an acceleration signal in accordance with a current acceleration in a travel direction of the electric assist vehicle; and a control device receiving the torque signal and the acceleration signal and determining a magnitude of the assist power to be generated by the electric motor. The control device calculates a target acceleration from the torque signal based on a rule prepared in advance, and determines the magnitude of the assist power to be generated by the electric motor such that a deviation between the target acceleration and the current acceleration is decreased.

Because of the structure of the bicycle of allowing the rider to have his/her foot step on, and rotate, the pedal, the magnitude of the human power of the rider applied to the pedal changes in accordance with the position of the pedal while the rider is rotating the pedal. Therefore, the acceleration in the travel direction of the electric assist bicycle changes in accordance with the position of the pedal while the rider is rotating the pedal. The electric assist system changes the magnitude of the assist power to be generated by the electric motor such that the deviation between the target acceleration found from the pedal force of the rider and the current acceleration of the vehicle is decreased. Even if a load is applied during the running, the pedal force of the rider is considered to represent the sense of acceleration desired by the rider. Therefore, the target acceleration is set based on the pedal force, and the current acceleration of the vehicle is controlled to made closer to the target acceleration. With such an arrangement, the rider may run the electric assist vehicle with an appropriate magnitude of assist power in accordance with the load during the running.

In an embodiment, the control device performs PID control to determine the magnitude of the assist power to be generated by the electric motor and thus to decrease the deviation.

In an embodiment, where a current deviation at current time t is represented as E(t), and feedback gains of a proportional element, a differential element and an integration element of the assist power control system are respectively represented as Kp, Kd and Ki, the control device may determine a motor torque Fm, corresponding to the assist power to be generated by the electric motor, by the following expression:

[Expression 1]

$$Fm(t) = Kp \times e(t) + Ki \times \int_0^t e(\tau)d\tau + Kd \times \frac{de(t)}{dt}$$

.

In an embodiment, the control device may determine the magnitude of the assist power to be generated by the electric motor such that the deviation is made closer to 0.

In any of the above-described embodiments, the ability of making the acceleration closer to the target acceleration may be improved.

In an embodiment, the control device stores, in advance, a table associating a command value for an electric current that is to flow in the electric motor and a magnitude of a motor torque corresponding to the assist power to be generated by the electric motor to each other, and refers to the table to determine the command value for the electric current required to generate the motor torque.

In an embodiment, the control device stores, in advance, a table associating a command value for an electric current that is to flow in the electric motor and a magnitude of a motor torque to each other for each of ranges of magnitudes of the deviation, and refers to the table to determine the command value for the electric current required to generate the motor torque.

In an embodiment, where a current deviation at current time t is represented as E(t), and feedback gains usable to find a command value for an electric current from a proportion term, an integration term and a differential term regarding a residual deviation are respectively represented as Kp', Kd' and Ki', the control device determines the command value Im, for the electric current that is to flow in the electric motor, by the following expression:

[Expression 2]

$$Im(t) = Kp' \times e(t) + Ki' \times \int_0^t e(\tau)d\tau + Kd' \times \frac{de(t)}{dt}$$

.

In an embodiment, the control device includes a storage device holding the rule prepared in advance.

In an embodiment, the rule may be a map or a function defining the correspondence between the torque signal and the target acceleration.

In an embodiment, the function may be a nonlinear function or a linear function.

In an embodiment, the control device includes a high-pass filter transmitting a high-frequency component of a predefined frequency or higher that is included in the received acceleration signal.

In an embodiment, the control device includes a high-pass filter transmitting a high-frequency component of 5 Hz or higher.

The high-pass filter may be provided, so that the acceleration generated by the rider rotating the pedal is appropriately extracted.

According to the present invention, during a time period in which the rider rotates the pedal to make one rotation of the crankshaft, the torque sensor and the acceleration sensor respectively output a torque signal and an acceleration signal continuously, and the control device determines the magnitude of the assist power to be generated by the electric motor temporally continuously.

In an embodiment, during a time period in which the rider rotates the pedal to make one rotation of the crankshaft, the torque signal changes in accordance with the rotation of the crankshaft that is associated with an operation of the rider rotating the pedal, the acceleration signal changes in accordance with the operation of the rider rotating the pedal and an external disturbance applied to the electric assist vehicle, and the control device calculates the target acceleration from the torque signal, calculates the acceleration from the acceleration signal, and determines the magnitude of the assist power to be generated by the electric motor at a predefined timing.

In an embodiment, the electric assist system further includes a motor driving circuit outputting, to the electric motor, an electric current having at least one of an amplitude, a frequency and a flow direction controlled in accordance with a command value. The control device outputs, to the motor driving circuit, a command value usable to cause an electric current that is in accordance with the determined magnitude of the assist power to flow. With such an arrangement, an appropriate magnitude of assist power may be generated such that the target acceleration in accordance with the pedal force during the running is obtained.

An electric assist vehicle according to an illustrative embodiment of the present invention includes the above-described electric assist system. In an embodiment, the electric assist vehicle includes a front wheel and a rear wheel; and a power transmission mechanism transmitting the human power of the rider and the assist power to the rear wheel. The electric assist vehicle including the electric assist system according to an illustrative embodiment of the present invention may generate an appropriate magnitude of assist power such that the target acceleration in accordance with the pedal force during the running is obtained.

## ADVANTAGEOUS EFFECTS OF INVENTION

According to an illustrative embodiment of the present invention, the magnitude of the assist power to be generated by the electric motor is changed such that the deviation between the target acceleration found from the pedal force of the rider and the current acceleration is decreased. Even if a load is applied during the running, the pedal force of the rider is considered to represent the sense of acceleration desired by the rider. Therefore, the target acceleration is set based on the pedal force, and the current acceleration of the vehicle is controlled to be made closer to the target acceleration. With such an arrangement, the rider may run the electric assist vehicle with an appropriate magnitude of assist power in accordance with the load during the running.

## BRIEF DESCRIPTION OF DRAWINGS

FIG. **1** is a side view showing an electric assist bicycle according to an embodiment of the present invention.

FIG. **2A** is a hardware block diagram of the electric assist bicycle.

FIG. **2B** is a block diagram showing a mechanical structure of the electric assist bicycle.

FIG. **3** is an external view of an operation panel.

FIG. **4** shows the relationship among the rotation angle of a crankshaft, the torque generated at the crankshaft and the acceleration in a travel direction of the vehicle.

FIG. **5A** shows an operation of decreasing a deviation **En** between a target acceleration and a current acceleration of the vehicle to generate assist power in accordance with a running load (headwind).

FIG. 5B shows an operation of decreasing the deviation **En** between the target acceleration and the current acceleration of the vehicle to generate assist power in accordance with a running load (ascending slope).

FIG. **6** shows the relationship between a pedal force provided by the human (torque signal) and the target acceleration.

FIG. **7** shows the relationship between the pedal force provided by the human (torque signal) and the target acceleration defined for each of N pieces of selectable assist modes.

FIG. **8** is a flowchart showing a procedure of a process performed by a control device **70**.

FIG. **9** shows waveforms of various signals when a load change occurs while the rider is pedaling the electric assist bicycle **1** in a certain pedaling manner.

FIG. **10** shows waveforms of various signals when a load change occurs while the rider is pedaling the electric assist bicycle **1** in the certain pedaling manner.

FIG. **11A** is a static load correlation diagram of the electric assist bicycle **1** on a flat road.

FIG. **11B** is a static load correlation diagram of the electric assist bicycle **1** on a slope having an inclination angle θ.

FIG. **12** shows a target acceleration (solid line) in the case where a low-frequency component is not removed by a high-pass filter **73**.

FIG. **13** shows a motor torque in accordance with the magnitude of the deviation in the acceleration.

## DESCRIPTION OF EMBODIMENTS

Hereinafter, embodiments of an electric assist system and an electric assist vehicle according to the present invention will be described with reference to the attached drawings. In the description of the embodiments, like elements will bear like reference signs, and overlapping descriptions will be omitted. In the embodiments of the present invention, the terms front, rear, left, right, up and down respectively refer to front, rear, left, right, up and down as seen from a rider, of the electric assist vehicle, sitting on a saddle (seat) as facing a handle. The following embodiments are examples, and the present invention is not limited to any of the following embodiments but to the appended claims.

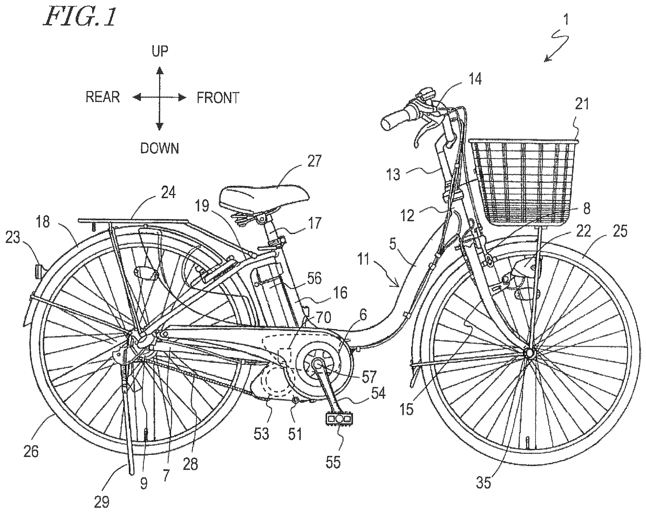

FIG. **1** is a side view showing an electric assist bicycle **1** according to this embodiment. The electric assist bicycle **1** includes a driving unit **51** described in detail below. The electric assist bicycle **1** is an example of electric assist vehicle according to the present invention. The driving unit **51** is an example of electric assist system according to the present invention.

The electric assist bicycle **1** includes a vehicle frame **11** extending in a front-rear direction. The vehicle frame **11** includes a head pipe **12**, a down tube **5**, a bracket **6**, a chain stay **7**, a seat tube **16**, and a seat stay **19**. The head pipe **12** is located at a front end of the vehicle frame **11**. A handle stem **13** is rotatably inserted into the head pipe **12**. A handle **14** is secured to a top end of the handle stem **13**. A front fork **15** is secured to a bottom end of the handle stem **13**. A front wheel **25**, which is a steering wheel, is rotatably supported at a bottom end of the front fork **15**. The front fork **15** is provided with a brake **8** braking the front wheel **25**. A front basket **21** is provided to the front of the head pipe **12**. The front fork **15** is provided with a head lamp **22**.

The down tube **5** extends obliquely rearward and downward from the head pipe **12**. The seat tube **16** extends upward from a rear end of the down tube **5**. The chain stay **7** extends rearward from a bottom end of the seat tube **16**. The bracket **6** connects the rear end of the down tube **5**, the bottom end of the seat tube **16** and a front end of the chain stay 7 to each other.

A seat post **17** is inserted into the seat tube **16**, and a saddle **27**, on which a rider is to sit, is provided at a top end of the seat post **17**. A rear portion of the chain stay **7** supports a rear wheel **26**, which is a driving wheel, such that the rear wheel **26** is rotatable. A brake **9** braking the rear wheel **26** is provided to the rear of the chain stay **7**. A stand **29** is provided to the rear of the chain stay **7**. While being parked, the electric assist bicycle **1** is held as standing by the stand **29**. The seat stay **19** extends obliquely rearward and downward from a top portion of the seat tube **16**. A bottom end of the seat stay **19** is connected with the rear portion of the chain stay **7**. The seat stay **19** supports a rack **24** provided to the rear of the saddle **27** and also supports a fender **18** covering a top portion of the rear wheel **26**. A tail lamp **23** is provided to the rear of the fender **18**.

The bracket **6**, which is located on the vehicle frame **11**, at a position in the vicinity of the center of the vehicle, is provided with the driving unit **51**. The driving unit **51** includes an electric motor **53**, a crankshaft **57**, and a control device **70**. A battery **56** supplying power to the electric motor **53** and the like is mounted on the bracket **6**. The battery **56** may be supported by the seat tube **16**.

The crankshaft **57** is supported in the state of running throughout the driving unit **51** in a left-right direction. Crank arms **54** are provided at both of two ends of the crankshaft **57**. A pedal **55** is rotatably provided at a tip of each of the crank arms **54**.

The control device **70** controls an operation of the electric assist bicycle **1**. The control device **70** typically includes a semiconductor integrated circuit, such as a microcontroller, a signal processor or the like, that is capable of processing a digital signal. A rotation output of the crankshaft **57** generated when the rider steps on, and rotates, the pedal **55** with his/her foot is transmitted to the rear wheel **26** via a chain **28**. The control device **70** controls the electric motor **53** to generate a driving assist output in accordance with the rotation output of the crankshaft **57**. The assist power generated by the electric motor **53** is transmitted to the rear wheel **26** via the chain **28**. Instead of the chain **28**, a belt, a shaft or the like may be used.

Now, a specific structure of the control device **70**, and a group of sensors that generate a signal usable to operate the control device **70,** will be described in detail.

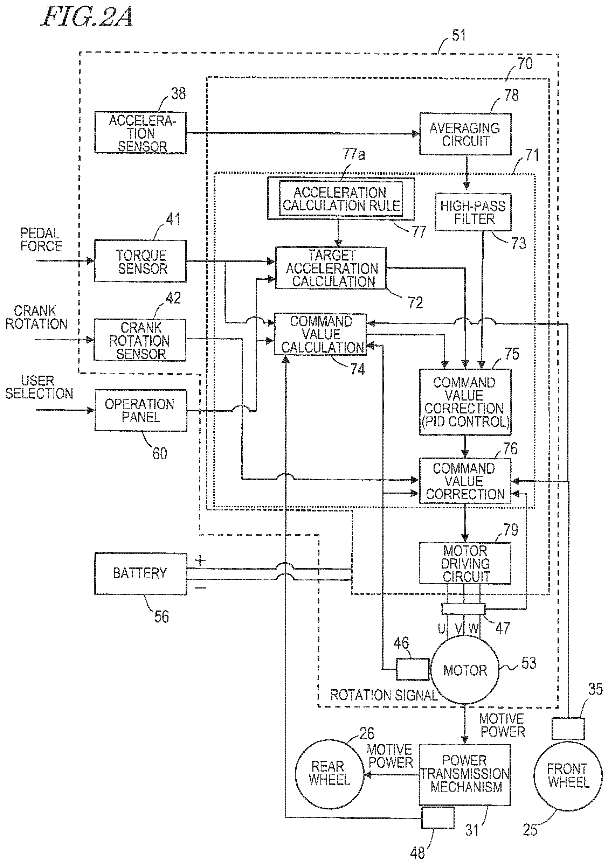

FIG. **2A** is a hardware block diagram of the electric assist bicycle **1,** mainly showing a structure of the control device **70.** FIG. **2A** also shows the control device **70** and a peripheral environment thereof. In the peripheral environment, for example, various sensors that output a signal to the control device **70** and the driving motor **53** driven as a result of the operation of the control device **70** are shown.

First, the peripheral environment of the control device **70** will be described.

As described above, the control device **70** is included in the driving unit **51.** FIG. **2A** shows an acceleration sensor **38,** a torque sensor **41,** a crank rotation sensor **42,** and the electric motor **53,** which are also included in the driving unit **51.** The control device **70** includes a calculation circuit **71,** an averaging circuit **78,** and a motor driving circuit **79.** The calculation circuit **71** receives a torque signal and calculates a target acceleration from the torque signal based on a rule prepared in advance. Thus, the calculation circuit **71** performs a calculation to determine the magnitude of the assist power to be generated by the electric motor such that a deviation between the target acceleration and a current acceleration is decreased, and outputs a control signal.

The acceleration sensor **38** detects an acceleration of a vehicle main body of the electric assist bicycle **1.** The acceleration sensor **38** is, for example, a three-axis acceleration sensor of a piezo resistance type, an electrostatic capacitance type, or a heat sensing type. One such three-axis acceleration sensor is capable of measuring the acceleration in each of three axial directions perpendicular to each other (X-axis, Y-axis and Z-axis directions). An acceleration signal may be a voltage signal in accordance with the magnitude of the acceleration. The acceleration sensor **38** may include an acceleration calculation circuit (not shown) converting the voltage signal into an acceleration value. The acceleration calculation circuit converts, for example, an output analog voltage signal into a digital voltage signal, and calculates the acceleration from the magnitude of the digital voltage signal.

In this specification, a signal that is output from the acceleration sensor **38** and represents the detected acceleration is referred to as an "acceleration signal". The acceleration signal may be either an analog voltage signal or a digital voltage signal. The acceleration sensor **38** may output an acceleration signal as a non-discrete, continuous signal, or may output an acceleration signal as a discrete signal representing the acceleration detected at a predetermined cycle (e.g., at a cycle of 0.1 seconds).

In this specification, the three axial directions perpendicular to each other (X-axis, Y-axis, and Z-axis directions) do not represent an absolute coordinate system but represent a relative coordinate system. More specifically, the three axial directions perpendicular to each other (X-axis, Y-axis and Z-axis directions) are respectively the front-rear direction, the left-right direction, and an up-down direction of the electric assist bicycle **1** including the acceleration sensor **38.** The forward direction of the electric assist bicycle **1** matches a travel direction thereof, and the up-down direction of the electric assist bicycle **1** matches a direction perpendicular to a road surface. Therefore, the X axis, the Y axis and the Z axis of the electric assist bicycle 1 running on a flat road may not match the X axis, the Y axis and the Z axis of the electric assist bicycle **1** running on a slope.

The three-axis acceleration sensor is an example of the acceleration sensor **38.** A two-axis acceleration sensor capable of measuring an acceleration Gx in the X-axis direction and an acceleration Gz in the Z-axis direction may be adopted as the acceleration sensor **38.** A monoaxial acceleration sensor capable of measuring the acceleration Gx in the X-axis direction may be adopted as the acceleration sensor **38.** The acceleration sensor **38** merely needs to be capable of measuring at least the acceleration Gx in the X-axis direction along the travel direction of the vehicle. A plurality of acceleration sensors may be used to detect accelerations in different axial directions respectively. In the example shown in FIG. **2A,** the acceleration sensor **38** is located in the driving unit **51.** The position of the acceleration sensor **38** is not limited to this, and the acceleration sensor **38** may be located at any position in the electric assist bicycle **1.**

The torque sensor **41** detects the human power (pedal force), applied by the rider to each of the pedals **55,** as a torque generated at the crankshaft **57.** The torque sensor **41** is, for example, a magnetostrictive torque sensor. The torque sensor **41** outputs a voltage signal having an amplitude of the magnitude in accordance with the detected torque. The torque sensor **41** may include a torque calculation circuit (not shown) that converts the voltage signal into a torque. The torque calculation circuit converts, for example, an output analog voltage signal into a digital voltage signal, and calculates the torque from the magnitude of the digital voltage signal.

In this specification, a signal that is output from the torque sensor **41** and represents the detected torque is referred to as a "torque signal". The torque signal may be either an analog voltage signal or a digital voltage signal. The torque sensor **41** may output a torque signal as a non-discrete, continuous signal, or may output a torque signal as a discrete signal representing the torque detected at a predetermined cycle (e.g., at a cycle of 0.1 seconds).

The crank rotation sensor **42** detects a rotation angle of the crankshaft **57.** For example, the crank rotation sensor **42** detects the rotation of the crankshaft **57** at every predetermined angle and outputs a rectangular wave signal or a sine wave signal. The output signal may be used to calculate a rotation angle and a rotation speed of the crankshaft **57.** For example, a plurality of magnetic bodies having magnetic poles (N pole, S pole) are located around the crankshaft **57.** A hall sensor located at a fixed position converts a change in the magnetic field polarity caused by the rotation of the crankshaft **57** into a voltage signal. The control device **70** uses the signal that is output from the hall sensor to count the changes in the magnetic field polarity and calculates the rotation angle and the rotation speed of the crankshaft **57**. The crank rotation sensor **42** may include a calculation circuit that calculates the rotation angle and the rotation speed of the crankshaft **57** from the output signal.

The motor driving circuit **79** is, for example, an inverter. The motor driving circuit **79** supplies, from the battery **56** to the electric motor **53,** an electric current having an amplitude, a frequency, a flow direction or the like in accordance with a motor electric current command value from the calculation circuit **71**. The electric motor **53** supplied with the electric current rotates to generate assist power of a determined magnitude. The details of the motor driving circuit **79** will be described below.

The rotation of the electric motor **53** is detected by a motor rotation sensor **46**. The motor rotation sensor **46** is, for example, a hall sensor, and detects the magnetic field generated by a rotor (not shown) of the electric motor **53** while the rotor is rotating and outputs a voltage signal in accordance with the strength or the polarity of the magnetic field. In the case where the electric motor **53** is a brushless DC motor, a plurality of permanent magnets are located in the rotor. The motor rotation sensor **46** converts a change in the magnetic field polarity caused by the rotation of the rotor into a voltage signal. The calculation circuit **71** uses the signal that is output from the motor rotation sensor **46** to count the changes in the magnetic field polarity, and calculates the rotation angle and the rotation speed of the rotor.

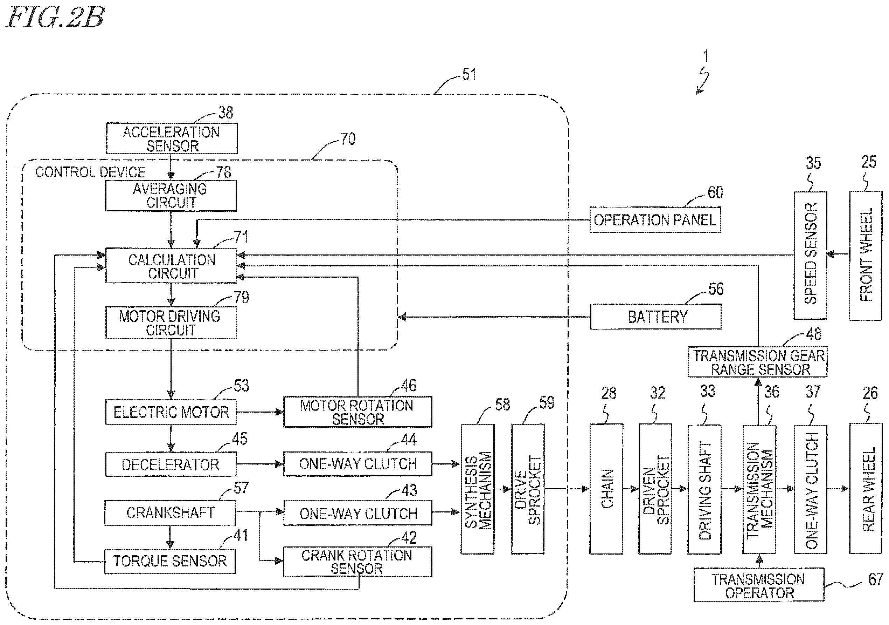

The assist power generated by the electric motor **53** is transmitted to the rear wheel **26** via the power transmission mechanism **31**. The power transmission mechanism **31** is a name of a group of components including the chain **28,** a driven sprocket **32,** a driving shaft **33,** a transmission mechanism **36,** a one-way clutch **37,** a decelerator (not shown) decelerating the rotation of the electric motor **53,** a transmission (not shown) provided on the rear wheel **26,** and the like described below with reference to FIG. **2B.** With the above-described structure, the human power of the rider of the electric assist bicycle **1** is assisted.

The calculation circuit **71** receives a detection signal that is output from each of the acceleration sensor **38,** the torque sensor **41** and the crank rotation sensor **42** and an operation signal that is output from the operation panel **60,** and determines the magnitude of the assist power. The calculation circuit **71** transmits a motor electric current command value, based on which the assist power of the determined magnitude is to be generated, to the motor driving circuit **79.** As a result, the electric motor **53** rotates, and the motive power of the electric motor **53** is transmitted to the rear wheel **26.** In this manner, the motive power of the electric motor **53** is added to the human power of the rider.

The detection signal that is output from any of the various sensors is an analog signal. In general, an A/D conversion circuit (not shown) that converts an analog signal into a digital signal may be provided on a stage before the detection signal is input to the control device **70.** The A/D conversion circuit may be provided in each of the sensors, or may be provided on a signal path, in the driving unit **51,** between each of the sensors and the control device **70.** Alternatively, the A/D conversion circuit may be provided in the control device **70.**

The magnitude of the assist power to be generated by the electric motor **53** may change in accordance with an assist mode currently selected. The assist mode may be selected by the rider operating the operation panel **60.**

The operation panel **60** is attached to the handle **14** (FIG. **1**) of the electric assist bicycle **1** and is connected with the control device **70** by, for example, a wire cable. The operation panel **60** transmits an operation signal, representing the operation made by the rider, to the control device **70,** and receives various information to be presented to the rider from the control device **70.**

Now, a power transmission route in the electric assist bicycle **1** will be described. FIG. **2B** is a block diagram showing an example of mechanical structure of the electric assist bicycle **1.**

When the rider steps on the pedal **55** to rotate the crankshaft **57,** the rotation of the crankshaft **57** is transmitted to the synthesis mechanism **58** via the one-way clutch **43.** The rotation of the electric motor **53** is transmitted to the synthesis mechanism **58** via the decelerator **45** and the one-way clutch **44.**

The synthesis mechanism **58** includes, for example, a cylindrical member, and the crankshaft **57** is located inside the cylindrical member. The drive sprocket **59** is attached to the synthesis mechanism **58.** The synthesis mechanism **58** rotates as centering around the same rotation shaft as that of the crankshaft **57** and the drive sprocket **59.**

The one-way clutch **43** transmits a forward rotation of the crankshaft **57** to the synthesis mechanism **58,** but does not transmits a reverse rotation of the crankshaft **57** to the synthesis mechanism **58.** The one-way clutch **44** transmits, to the synthesis mechanism **58,** a rotation of the electric motor **53** in such a direction as to rotate the synthesis mechanism **58** in a forward direction, but does not transmit, to the synthesis mechanism **58,** a rotation of the electric motor **53** in such a direction as to rotate the synthesis mechanism **58** in a reverse direction. In the case where the rider rotates the pedal **55** to rotate the synthesis mechanism **58** while the electric motor **53** is at a stop, the one-way clutch **44** does not transmit the rotation to the electric motor **53.** The pedal force applied by the rider to the pedal **55** and the assist power generated by the electric motor **53** are transmitted to the synthesis mechanism **58** to be synthesized. The resultant force synthesized by the synthesis mechanism **58** is transmitted to the chain **28** via the drive sprocket **59.**

The rotation of the chain **28** is transmitted to the driving shaft **33** via the driven sprocket **32.** The rotation of the driving shaft **33** is transmitted to the rear wheel **26** via the transmission mechanism **36** and the one-way clutch **37.**

The transmission mechanism **36** is a mechanism that changes the transmission gear ratio in accordance with the operation of the rider made on a transmission operator **67.** The transmission operator **67** is attached to, for example, the handle **14** (FIG. **1**). In the case where the rotation speed of the driving shaft **33** is higher than the rotation speed of the rear wheel **36,** the one-way clutch **37** transmits the rotation of the driving shaft **33** to the rear wheel **26.** In the case where the rotation speed of the driving shaft **33** is lower than the rotation speed of the rear wheel **36,** the one-way clutch **37** does not transmit the rotation of the driving shaft **33** to the rear wheel **26.**

With the above-described power transmission route, the pedal force applied by the rider on the pedal **55** and the assist power generated by the electric motor **53** are transmitted to the rear wheel **26.**

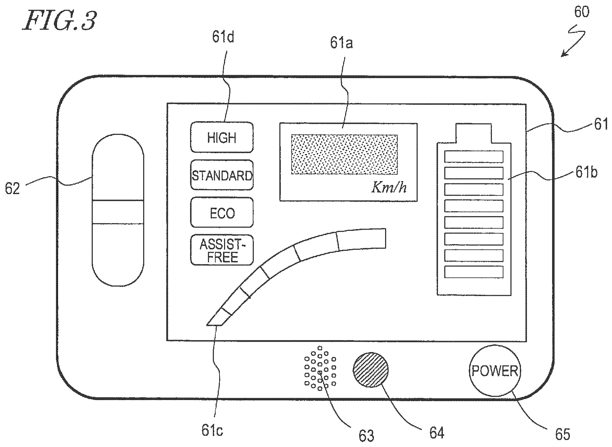

FIG. **3** is an illustrate external view of the operation panel **60.** The operation panel **60** is attached to, for example, the handle **14,** at a position close to a left grip thereof.

The operation panel **60** includes a display panel **61,** an assist mode operation switch **62,** and a power source switch **65.**

The display panel **61** is, for example, a liquid crystal panel. The display panel **61** displays information provided by the control device **70** that includes the speed of the electric assist bicycle **1,** the remaining capacitance of the battery **56,** information on the range in which the assist ratio is to be changed, the assist mode, and other information on the running.

The display panel **61** includes a speed display area **61a,** a battery remaining capacitance display area **61b,** an assist ratio change range display area **61c,** and an assist mode display area **61d.** The display panel **61** acts as a notification device that notifies the rider of such information and the like. In this example, the information is displayed. Alternatively, an audio signal may be output to notify the rider of the information.

The speed display area **61a** displays the vehicle speed of the electric assist bicycle **1** by numerical figures. In this embodiment, the vehicle speed of the electric assist bicycle **1** is detected by a speed sensor **35** provided on the front wheel **25.**

The battery remaining capacitance display area **61b** displays the remaining capacitance of the battery **56** by segments based on information on the battery remaining capacitance that is output from the battery **56** to the control device **70.** With such display, the rider intuitively grasps the remaining capacitance of the battery **56.**

The assist ratio change range display area **61c** displays the range, set by the control device **70,** in which the assist ratio is to be changed. The range is displayed by segments. The assist ratio, within the change ratio, that is currently used may also be displayed.

The assist mode display area **61d** displays the assist mode selected by the rider operating the assist mode operation switch **62.** The assist mode is, for example, "high", "standard" or "automatic ecological". In the case where the rider operates the assist mode operation switch **62** to select "assist mode off", the assist mode display area **61d** displays "assist-free".

The assist mode selection switch **62** is for the rider to select one of the plurality of assist modes (including "assist mode off") described above. When one of the plurality of assist modes is selected, a microcontroller (not shown) provided inside the operation panel **60** transmits an operation signal, specifying the selected assist mode, to the control device **70.**

The power source switch **65** is a switch by which the power source of the electric assist bicycle 1 is switched on or off. The rider presses the power source switch 65 to switch the power source of the electric assist bicycle 1 on or off.

The operation panel **60** further includes a speaker **63** providing necessary information to the rider by an audio signal and a lamp **64** providing necessary information to the rider by light. For example, the control device **70** changes the magnitude of the assist power to be generated by the electric motor **53** in accordance with the change in the acceleration, which is associated with the operation of the rider rotating the pedal **55.** At this point, it is notified to the rider by, for example, the output of an audio signal and/or blinking of light, that the magnitude of the assist power has been changed. As a result of the notification, the rider recognizes that, for example, large assist power has been generated. Alternatively, the handle **14** and/or the saddle **27** may be vibrated to notify the rider that the magnitude of the assist power has been changed.

While the assist power is increasing, the speaker **63** may be caused to generate an audio signal of a volume that is heard by people around the electric assist bicycle **1,** or the head lamp **22** and the tail lamp **23** may be lit up or blinked. With such an arrangement, the people around the electric assist bicycle **1** recognize that the electric assist bicycle **1** is generating assist power larger than the usual assist power.

The assist power of the electric motor **53** is largest in the "high" mode, is smallest in the "automatic ecological" mode, and is middle in the "standard" mode in response to the crank rotation output.

In the case where the assist mode is "standard", the electric motor **53** generates assist power when, for example, the electric assist bicycle **1** is to start, is running on a flat road, or is running on an ascending slope. In the case where the assist mode is "high", the electric motor **53** generates assist power when, for example, the electric assist bicycle **1** is to start, is running on a flat road, or is running on an ascending slope, like in the case where the assist mode is "standard". In the case where the assist mode is "high", the electric motor **53** generates larger assist power than in the case where the assist mode is "standard" in response to the same crank rotation output. In the case where the assist mode is "automatic ecological", when, for example, the electric assist bicycle **1** is to start on a flat road, the electric motor **53** generates assist power smaller than that in the case where the assist mode is "standard", and when the electric assist bicycle **1** is running on an ascending slope, the electric motor **53** generates assist power larger than that in the case where the assist mode is "standard". When the pedal force is small because the electric assist bicycle **1** is, for example, running on a flat road or on a descending slope, the electric motor **53** decreases the assist power as compared with in the case where the assist mode is "standard" or stops the generation of the assist power to suppress the power consumption. In the case where the assist mode is "assist-free mode", the electric motor **53** does not generate any assist power.

As described above, the assist power in response to the crank rotation output is varied in accordance with the assist mode described above. In this example, the assist mode is switched to any one of four stages. Alternatively, the assist mode may be switched to any of three stages or less, or any of five stages or more.

Now, an operation of changing the magnitude of the assist power to be generated by the electric motor **53** in accordance with the acceleration, which changes in association with the operation of the rider rotating the pedal **55,** will be described.

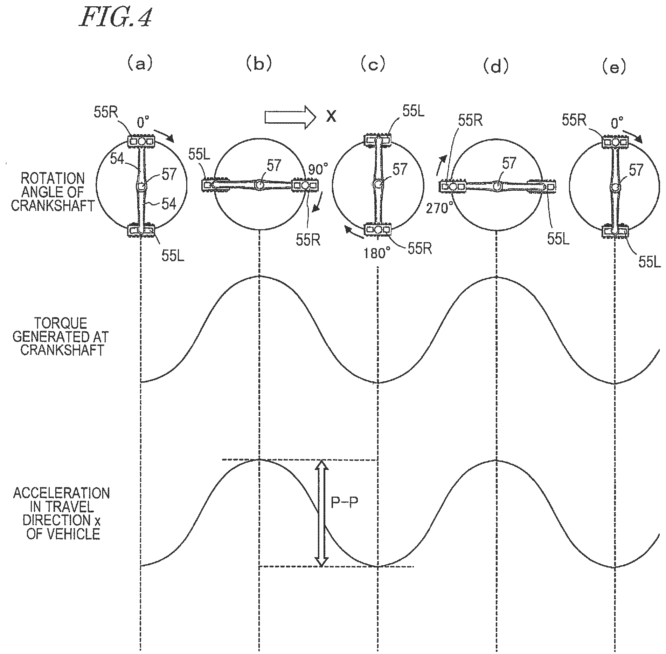

First, the relationship between the operation of the rider rotating the pedal **55** and the acceleration will be described. FIG. **4** shows the relationship among the rotation angle of the crankshaft **57,** the torque generated at the crankshaft **57** and the acceleration in the travel direction of the vehicle while the rider is rotating the pedal **55.** In the example shown in FIG. **4,** the electric assist bicycle **1** is running on a flat road, and the direction from left to right in the figure is assumed to be a travel direction **x** of the vehicle.

Because of the structure of the electric assist bicycle **1** of allowing the rider to have his/her foot step on, and rotate, the pedal **55,** the magnitude of the human power (pedal force) of the rider applied to the pedal **55** is increased or decreased in accordance with the position of the pedal **55,** namely, the rotation angle of the crankshaft **57.** The increase or the decrease in the pedal force applied to the pedal **55** appears as increase or decrease in the torque generated at the crankshaft **57.** When the torque is increased or decreased, the motive power that runs the electric assist bicycle **1** is increased or decreased. Therefore, the acceleration in the travel direction **x** of the electric assist bicycle **1** is increased or decreased in accordance with the increase or the decrease in the torque.

**(a)** of FIG. **4** shows a state where a right pedal **55R** of the electric assist bicycle **1,** on which the rider puts his/her right foot, is located just above the crankshaft **57,** whereas a left pedal **55L** of the electric assist bicycle **1,** on which the rider puts his/her left foot, is located just below the crankshaft **57.** The rotation angle of the crankshaft **57** at this point is set as 0 degrees. In this state, the torque generated at the crankshaft **57** by the human power is minimum. In association with the torque, the acceleration in the travel direction **x** is also minimum.

From the state shown in **(a)** of FIG. **4,** the rider steps on the right pedal **55R,** and as a result, the rotation angle of the crankshaft **57** is increased. As the rotation angle of the crankshaft **57** is increased, the torque generated at the crankshaft **57** by the human power is gradually increased. As the torque is gradually increased, the acceleration in the travel direction **x** of the vehicle is also increased.

**(b)** of FIG. **4** shows a state where the right pedal **55R** is located to the front, in a horizontal direction, of the crankshaft **57,** whereas the left pedal **55L** is located to the rear, in the horizontal direction, of the crankshaft **57.** The rotation angle of the crankshaft **57** at this point is set as 90 degrees. When the rotation angle is 90 degrees, the torque generated at the crankshaft **57** by the human power is maximum. In association with the torque, the acceleration in the travel direction **x** of the vehicle is also maximum.

From the state shown in **(b)** of FIG. **4,** the rotation angle of the crankshaft **57** is further increased. As the rotation angle of the crankshaft **57** is increased, the torque generated at the crankshaft **57** by the human power is gradually decreased. As the torque is gradually decreased, the acceleration in the travel direction **x** of the vehicle is also decreased.

**(c)** of FIG. **4** shows a state where the right pedal **55R** is located just below the crankshaft **57,** whereas the left pedal **55L** is located just above the crankshaft **57.** The rotation angle of the crankshaft **57** at this point is set as 180 degrees. When the rotation angle is 180 degrees, the torque generated at the crankshaft **57** by the human power is minimum. In association with the torque, the acceleration in the travel direction **x** of the vehicle is also minimum.

From the state shown in **(c)** of FIG. **4,** the rider steps on the left pedal **55L,** and as a result, the rotation angle of the crankshaft **57** is further increased. As the rotation angle of the crankshaft **57** is increased, the torque generated at the crankshaft **57** by the human power is gradually increased. As the torque is gradually increased, the acceleration in the travel direction **x** of the vehicle is also increased.

**(d)** of FIG. **4** shows a state where the left pedal **55L** is located to the front, in the horizontal direction, of the crankshaft **57,** whereas the right pedal **55R** is located to the rear, in the horizontal direction, of the crankshaft **57.** The rotation angle of the crankshaft **57** at this point is set as 270 degrees. When the rotation angle is 270 degrees, the torque generated at the crankshaft **57** by the human power is maximum. In association with the torque, the acceleration in the travel direction **x** of the vehicle is also maximum.

From the state shown in **(d)** of FIG. **4,** the rotation angle of the crankshaft **57** is further increased. As the rotation angle of the crankshaft **57** is increased, the torque generated at the crankshaft **57** by the human power is gradually decreased. As the torque is gradually decreased, the acceleration in the travel direction **x** of the vehicle is also decreased.

**(e)** of FIG. **4** shows a state where the right pedal **55R** is located just above the crankshaft **57,** whereas the left pedal **55L** is located just below the crankshaft **57.** Namely, **(e)** of FIG. **4** shows a state where the crankshaft **57** has made one rotation from the state shown in **(a)** of FIG. **4.** The rotation angle of the crankshaft **57** at this point is set as 0 degrees. When the rotation angle is 0 degrees, the torque generated at the crankshaft **57** by the human power is maximum. In association with the torque, the acceleration in the travel direction **x** of the vehicle is also maximum.

In this manner, the torque generated at the crankshaft **57** increases or decreases in accordance with the rotation angle of the crankshaft **57.** In the torque that increases and decreases, a ridge and a trough appear alternately. In synchronization with the increase and the decrease in the torque, the acceleration in the travel direction **x** of the vehicle increases and decreases. In synchronization with the timings when the ridge and the trough of the torque appear, a ridge and a trough appear alternately in the acceleration that increases and decreases.

In a zone between the ridge and the trough, adjacent to each other, of the torque, a peak of the ridge represents the maximum value of the torque in the zone. A bottom of the trough of the torque represents the minimum value of the torque in the zone. In this specification, the zone between the ridge and the trough adjacent to each other includes the peak of the ridge and the bottom of the trough.

In a zone between the ridge and the trough, adjacent to each other, of the acceleration, a peak of the ridge represents the maximum value of the acceleration in the zone. A bottom of the trough of the acceleration represents the minimum value of the acceleration in the zone. In synchronization with the timings at which the ridge and the trough, adjacent to each other, of the torque that increases and decreases appear, the maximum value and the minimum value of the acceleration appear.

The rider riding the electric assist bicycle **1** adjusts the pedal force to be applied to the pedal **55** and the speed at which the pedal **55** is to be rotated, so as to accelerate the electric assist bicycle **1** with the sense of acceleration desired by the rider and thus to run the electric assist bicycle **1** at the speed desired by the rider. In this specification, the manner of the rider pedaling the electric assist bicycle **1** with a torque changing periodically as shown in FIG. **4** will be referred to as a "certain pedaling manner".

While the rider is pedaling the electric assist bicycle **1** on a flat road in the certain pedaling manner, the rider is considered to wish to run the electric assist bicycle **1** at an acceleration changing periodically as shown in FIG. **4.** Meanwhile, the electric assist bicycle **1** is influenced by various external disturbances. For this reason, the acceleration changing periodically as shown in FIG. **4** may not be obtained. For example, a headwind caused by the running of the electric assist bicycle **1,** a wind meteorologically generated and/or a slope are all examples of the external disturbances.

The present inventor conceived adjusting the assist power of the electric assist bicycle **1** such that while the rider is pedaling the electric assist bicycle **1** in the certain pedaling manner, the rider runs the electric assist bicycle **1** with the sense of acceleration changing periodically as shown in FIG. **4** regardless of whether there is any external disturbance or not. The "sense of acceleration" used in this specification refers to the sense of speed that the rider feels by increase or decrease in the speed in the travel direction while running the electric assist bicycle **1** with the acceleration changing periodically as shown in FIG. **4.** The "sense of acceleration" is different from the acceleration detected by the acceleration sensor **38.** As described below, on a slope, the acceleration sensor **38** detects an acceleration in accordance with the inclination. Therefore, even when the electric assist bicycle **1** is at a stop, the acceleration sensor **38** outputs a certain value that is not zero. For this reason, even if the electric assist bicycle **1** runs with exactly the same change in the speed on a flat road and on a slope, the acceleration detected by the acceleration sensor **38** on the flat road, and the acceleration detected by acceleration sensor **38** on the slope, do not match each other. However, if the assist power is adjusted appropriately, the rider running with an influence of an external disturbance, for example, the rider running on a slope, may pedal the electric assist bicycle **1** with the same sense of acceleration as that on the flat road. The "same sense of acceleration" may be rephrased as, for example, the same average speed per hour in a certain time period. In an embodiment of the present invention, the rider is allowed to drive the electric assist bicycle **1** with the same sense of acceleration while running on a flat road and while running with a load.

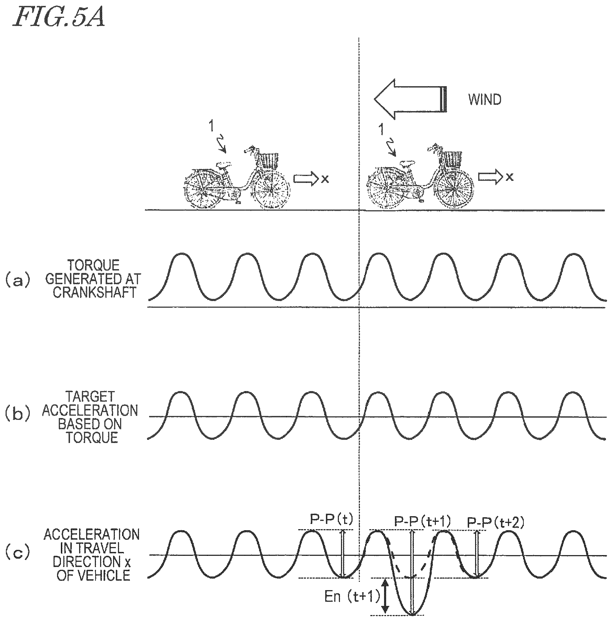

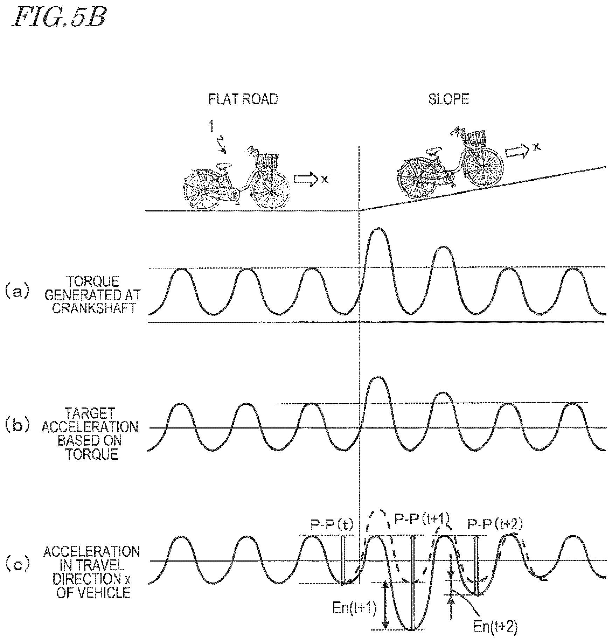

Hereinafter, an overview of an operation of the electric assist bicycle **1** according to this embodiment willbe described with reference to FIG. 5A and FIG. 5B.

FIG. **5A** shows an example of motion of the electric assist bicycle **1** in the case where the rider is subjected to a headwind as a load. It is assumed that there is no wind up to a certain time point, and then the rider is subjected to the headwind at the timing represented by the dotted line parallel to the up-down direction of the figure.

**(a)** of FIG. **5A** schematically shows a waveform of a value of the torque obtained based on the torque signal. As understood from the waveform in **(a)** of FIG. **5A,** the rider rides the electric assist bicycle **1** in the certain pedaling manner. In this embodiment, the control device **70** calculates a target acceleration from the torque signal, and determines the magnitude of the assist power to be generated by the electric motor **53** such that the deviation between the target acceleration and the current acceleration is decreased.

The present inventor considered that the value of the torque represented by the torque signal is a value directly indicating with what acceleration the rider wishes to drive the electric assist bicycle **1,** and set a map or a function defining the correspondence between the torque signal and the target acceleration. The map or function may be used to determine the target acceleration uniquely from the value of the torque.

**(b)** of FIG. **5A** schematically shows a waveform of the target acceleration calculated based on the torque. In general, as the value of the torque is smaller, the target acceleration is smaller; whereas as the value of the torque is larger, the target acceleration is larger. The value of the target acceleration may be increased or decreased in synchronization with the value of the torque.

**(c)** of FIG. **5A** schematically shows the acceleration in the travel direction **x** of the vehicle. The solid line represents a waveform of the acceleration signal that is output from the acceleration sensor **38,** and the dashed line represents the waveform of the target acceleration. Hereinafter, a difference between the ridge and the trough, adjacent to each other, of the acceleration at time **t** will be referred to as **"P-P(t)",** for example.

The difference **P-P(t)** and a difference **P-P(t+1)** will be compared against each other. The acceleration value of the latter has a larger amplitude in the negative direction. Therefore, the deviation **En(t+1)** between the acceleration value and the target acceleration value at time **(t+1)** is relatively large.

In this embodiment, the control device **70** determines the magnitude of the assist power to be generated by the electric motor **53** such that the deviation **En(t+1)** is decreased. The term "decreased" refers to, for example, "made 0 (zero)".

After the electric assist bicycle 1 is subjected to the headwind, the control device **70** generates larger assist power. As a result, at time **(t+2)**, a deviation **En(t+2)** is converged to approximately 0. This indicates that the rider is subjected to the headwind but maintains the same acceleration as long as keeping on pedaling the electric assist bicycle **1** with the same pedal force (torque).

FIG. 5B shows an example of motion of the electric assist bicycle **1** in the case where the rider receives, from a slope, a downward force parallel to the inclining surface as a load. It is assumed that the electric assist bicycle **1** runs on a flat road up to a certain time point and then, starts running on a slope at the timing represented by the dotted line parallel to the up-down direction of the figure. **(b)** and **(c)** of FIG. 5B respectively show the target acceleration and the current acceleration. In each of **(b)** and **(c)** of FIG. 5B, the waveform after the electric assist bicycle **1** starts running on the slope is provided as a waveform obtained as a result of removing, by a high-pass filter, a low-frequency component of the acceleration which is added in accordance with the slope. This process will be described below in detail.

**(a)** of FIG. 5B schematically shows a waveform of a value of the torque obtained based on the torque signal. As understood from the waveform in **(a)** of FIG. 5B, the rider rides the electric assist bicycle **1** in the certain pedaling manner on a flat road, but pedals the electric assist bicycle **1** with a larger pedal force immediately after the start of the slope. Such a manner of pedaling is common. A reason for this is that before and after the start of the slope, the rider expects that the speed will be decreased due to the ascending slope, and intuitively pedals the electric assist bicycle 1 strongly.

**(b)** of FIG. 5B schematically shows a waveform of the target acceleration calculated based on the torque. As described above regarding **(b)** of FIG. **5A,** as the value of the torque is smaller, the target acceleration is smaller; whereas as the value of the torque is larger, the target acceleration is larger. It is understood that in synchronization with the larger pedal force immediately after the start of the slope, the target acceleration is calculated to be larger than that before the start of the slope.

**(c)** of FIG. 5B schematically shows the acceleration in the travel direction **x** of the vehicle. The solid line represents a waveform of the acceleration signal that is output from the acceleration sensor **38,** and the dashed line represents the waveform of the target acceleration.

The difference **P-P(t)** and the difference **P-P(t+1)** will be compared against each other. The acceleration value of the latter has a larger amplitude in the negative direction. Therefore, the deviation **En(t+1)** between the acceleration value and the target acceleration value at time **(t+1)** is relatively large.

The control device **70** determines the magnitude of the assist power to be generated by the electric motor **53** such that the deviation **En(t+1)** is decreased. In this example also, the term "decreased" refers to, for example, "made 0 (zero)".

After the electric assist bicycle 1 starts running on the slope, the control device 70 generates larger assist power. As a result, the difference **P-P(t+2)** is smaller than the difference **P-P(t+1).** However, the difference **P-P(t+2)** is not converged to 0. Therefore, the control device **70** further determines the magnitude of the assist power to be generated by the electric motor **53** such that the deviation **En(t+2)** between the acceleration value and the target acceleration value at time **(t+2)** is decreased. As a result of such a process, the deviation regarding the electric assist bicycle **1** after time **(t+2)** is converted to approximately 0.

As the electric assist bicycle **1** advances on the slope, the electric motor **53** generates larger assist power. Therefore, the rider gradually decreases the pedal force (torque) and as a result, returns the pedal force to the level on the flat road. After starting running on the slope, the rider may return the pedal force (torque) to the same level of pedal force as that on the flat road within a sufficiently short time period, and may still obtain the same sense of acceleration as that on the flat road.

With the above-described control, the rider does not need to pedal the electric assist bicycle **1** strongly when the load is heavy, and the electric assist bicycle **1** is prevented from jumping out due to excessively large assist power when the load is light. Namely, the rider may obtain a desired sense of acceleration, which is substantially the same as that on the flat road, regardless of whether the load is heavy or light as long as keeping on riding the electric assist bicycle **1** in the certain pedaling manner.

Now, an internal structure of the control device **70** will be described with reference to FIG. **2A** again, and then, an operation performed by the control device **70** will be described.

As described above, the control device **70** includes the calculation circuit **71,** the averaging circuit **78,** and the motor driving circuit **79.** The calculation circuit **71** will be described as being an integrated circuit including a plurality of circuits in this embodiment, but such a structure is an example. A process realized by one or a plurality of circuits may be realized by a software process by use of one signal processor.

The averaging circuit **78** is a digital filtering circuit that smooths a detection signal regarding each of the axial directions that is output from the acceleration sensor **38.** The averaging circuit **78** may, for example, calculate a moving average of a plurality of detection signals to smooth the detection signals. Another smoothing algorithm may be used. In this embodiment, the averaging circuit **78** is provided. Nonetheless, according to the present invention, it is not indispensable to provide the averaging circuit **78.**

The calculation circuit **71** performs a calculation of finding a motor electric current command value from the assist mode or the like, performs a calculation of finding a target acceleration based on the torque, performs a calculation of finding a motor torque at which the deviation between the target acceleration and the current acceleration is decreased and correcting the motor electric current command value such that the obtained motor torque is generated, performs a calculation of further correcting the corrected motor command value in consideration of a condition such as the speed or the like, and outputs a control signal.

In this embodiment, the calculation circuit **71** includes blocks performing a plurality of types of processes. Specifically, the calculation circuit **71** includes a target acceleration calculation block **72,** a high-pass filter **73,** a motor electric current command value calculation block **74,** motor electric current command value correction blocks **75** and **76,** and a storage block **77.** Each of the blocks other than the storage block **77** may be mounted as a calculation core in the calculation circuit **71,** or may be mounted as a sub routine or a library of a computer program.

The target acceleration calculation block **72** receives a torque signal from the torque sensor **41,** and refers to an acceleration calculation rule **77a** stored in advance on the storage block **77** described below to calculate the target acceleration from the torque signal.

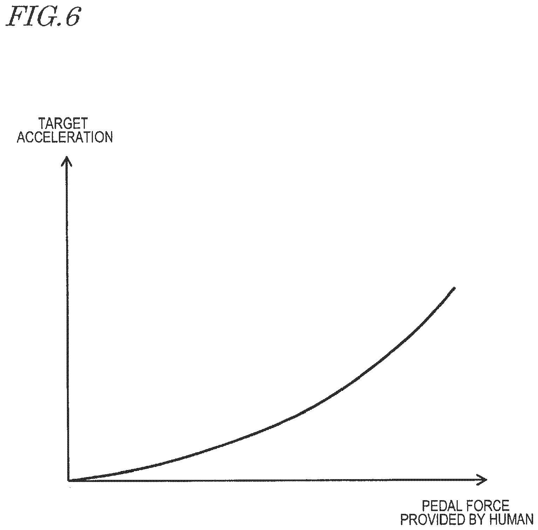

FIG. **6** shows an example of the acceleration calculation rule **77a** representing the relationship between the pedal force provided by the human (torque signal) and the target acceleration. As described above, the present inventor considered that once the pedal force of the rider is found, the acceleration desired by the rider is specified uniquely. Thus, the present inventor prepared, in advance, the correspondence between the pedal force provided by the human (torque signal) and the target acceleration in the form of the acceleration calculation rule **77a,** and stored the acceleration calculation rule **77a** on the storage block **77.** The target acceleration calculation block **72** refers to the acceleration calculation rule **77a** to calculate the target acceleration based on the pedal force obtained from the torque sensor **41.**

In FIG. **6,** the correspondence between torque signal and the target acceleration is represented as a nonlinear continuous function. This is an example. The correspondence between torque signal and the target acceleration may be represented as a linear continuous function, or may be represented by a map or a table that associates the signal value of the torque signal and the target acceleration in a one-to-one manner.

The example shown in FIG. **6** may be extended. In the case where any assist mode is selectable, a different function, map or table may be selected in accordance with the selected assist mode.

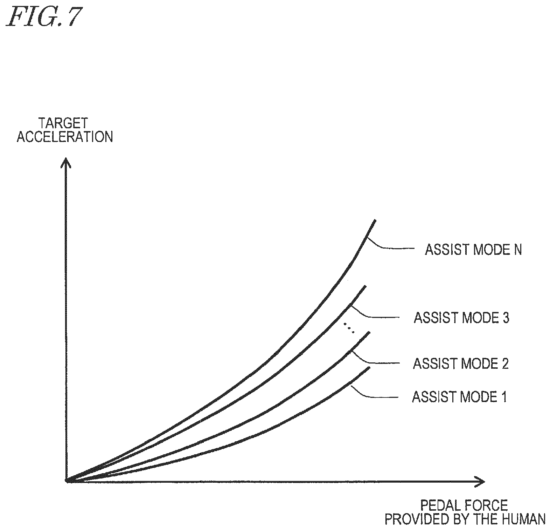

FIG. **7** shows the relationship between the pedal force provided by the human (torque signal) and the target acceleration that is defined for each of the N pieces of selectable assist modes. It is assumed that the assist ratio is lowest in assist mode 1 and is highest in assist mode N. In the example shown in FIG. **7,** as the assist mode is of a higher assist ratio, a larger target acceleration may be set for the same pedal force.

Specific profiles in FIG. **6** and FIG. **7** may be appropriately determined by a designer or a producer of the electric assist bicycle **1** based on the specifications or the like of the electric assist bicycle **1.** In other words, unless the specifications of the electric assist bicycle **1** are determined, the specific profiles in FIG. **6** and FIG. **7** are not determined. A reason for this is that even with the same pedal force, the acceleration performance significantly varies in accordance with, for example, the diameter, the number of teeth or the like of each of the sprocket (not shown) attached to the crankshaft and the sprocket (not shown) attached to the rear wheel.

The motor electric current command value calculation block **74** calculates the motor electric current command value, based on which subsequent processes are to be performed. In general, the magnitude of the torque to be generated by the electric motor **53** is in proportion to the level of the electric current to flow in the electric motor **53.** Once the level of the electric current that is to flow in the electric motor **53** is determined, the magnitude of the torque to be generated is determined uniquely. Namely, determining the motor electric current command value is determining the magnitude of the torque to be generated by the electric motor **53.**

First, a method for calculating the motor electric current command value will be generally described, and then will be described in detail. The motor electric current command value calculation block **74** receives data specifying the assist mode selected by the rider by use of the operation panel **60,** and sets the assist mode. A reason for this is that the map or rule to be used to determine the motor electric current command value is different in accordance with the assist mode. The motor electric current command value calculation block **74** also receives a value representing the magnitude of the pedal torque detected by the torque sensor **41.** The magnitude of the pedal torque is one of parameters usable to determine the assist power. The motor electric current command value calculation block **74** further receives, from a transmission gear range sensor **48,** data representing the transmission gear range of the transmission. The transmission gear range sensor **48** detects the transmission gear range of the transmission included in the power transmission mechanism **31.** The magnitude of the assist power to be applied to the ground by the rear wheel **26** changes in accordance with the level of the transmission gear range. Therefore, the output value of the transmission gear range sensor **48** is also considered to be one of the basic parameters usable to calculate the motor electric current command value. The motor electric current command value calculation block **74** further receives speed data from the speed sensor **35.**

The motor electric current command value calculation block **74** determines the motor electric current command value such that the ratio between the torque to be generated at a driving shaft of the rear wheel **26** by the pedal force and the torque to be generated at the driving shaft of the rear wheel **26** by the driving motor **53** matches the assist ratio. The "assist ratio" is a ratio of the assist output generated by the electric motor **53** with respect to the crank rotation output that is generated by the human power of the rider applied to the pedal **55.** The assist ratio may also be referred to as a "driving assist ratio".

The motor electric current command value calculation block **74** finds the motor electric current command value such that, for example, the torque to be generated at the driving shaft of the rear wheel **26** by the pedal force and the torque to be generated at the driving shaft of the rear wheel **26** by the driving motor **53** are equal to each other (assist ratio is 1:1). The motor electric current command value may be found by use of, for example, a predefined "table representing the relationship between the human power torque and the motor electric current command value". In this process, the motor electric current command value calculation block **74** calculates the motor electric current command value further in consideration of the deceleration ratio of the decelerator that decelerates the rotation of the electric motor **53.** When, for example, the deceleration ratio is N, the motor electric current command value calculation block **74** calculates the motor electric current command value such that a motor torque that is 1/N of the torque to be generated at the driving shaft of the rear wheel **26** by the pedal force is generated. When, for example, the deceleration ratio is 2, the motor electric current command value calculation block **74** calculates the motor electric current command value such that a motor torque that is 1/2 of the torque to be generated at the driving shaft of the rear wheel **26** by the pedal force is generated.

Next, the motor electric current command value calculation block **74** multiplies the motor electric current command value by a coefficient in accordance with the assist mode set by the user. For example, the coefficient is set to 2 when the assist mode is "high", the coefficient is set to 1 when the assist mode is "standard", and the coefficient is set to 0.8 when the assist mode is "low". With such settings, the motor electric current command value calculation block **74** multiplies the motor electric current command value by the coefficient corresponding to the assist mode set by the user.

Next, the motor electric current command value calculation block **74** corrects the motor electric current command value in consideration of the vehicle speed. In the case where, for example, the vehicle speed is low, the motor electric current command value calculation block **74** sets the motor electric current command value to be relatively large. As the vehicle speed is increased, the motor electric current command value calculation block **74** decreases the motor electric current command value. The motor electric current command value calculation block **74** sets the motor electric current command value in this manner, so that the assist power at the start of the vehicle is increased and thus the feel of driving is improved.

Next, the motor electric current command value calculation block **74** corrects the motor electric current command value in consideration of the transmission gear range. In the case where, for example, the current transmission gear range is lower than, or equal to, a predefined transmission gear range, the motor electric current command value calculation block **74** may set the level of the electric current that is to flow in the electric motor **53** to be relatively low. With such a setting, the magnitude of the assist power to be generated by the electric motor **53** is suppressed, and the acceleration of the vehicle is prevented from becoming excessively large. Thus, the feel of driving is improved.

The motor electric current command value calculation block **74** may calculate the transmission gear range from the rotation speed of the electric motor **53** and the running speed of the vehicle main body. The motor electric current command value calculation block **74** calculates the transmission gear range by use of the output signal of the motor rotation sensor **46** and the output signal of the speed sensor **35.** In this case, the transmission gear range sensor **48** may be omitted.

The above-described order of the processes performed by the motor electric current command value calculation block **74** is merely an example. The processes may be performed in an order different from the above. For example, the motor electric current command value calculation block **74** may first correct the motor electric current command value in consideration of the transmission gear range and then correct the motor electric current command value in consideration of the vehicle speed. Provision of the transmission gear range sensor **48** is not indispensable in this embodiment. The motor electric current command value calculation block **74** outputs the motor electric current command value to the motor electric current command value correction block **75.**

Now, the high-pass filter **73** will be described. The high-pass filter **73** is a digital filter that transmits a component of a predefined frequency, for example, a high-frequency component of 5 Hz or higher. It should be noted that in the case where an analog acceleration signal is input to the high-pass filter **73**, the high-pass filter **73** is an analog filter. The basis for "5 Hz" mentioned above will be described briefly. Assuming that the cadence is 200 rpm at the maximum, the pedal makes 3.3 rotations per second. Namely, the rotation of the pedal is 3.3 Hz. With a margin of about 1.5 times this value, the value "5 Hz" is determined. The value does not need to be precisely 5 Hz, and may be appropriately adjusted by a person of ordinary skill in the art.

The motor electric current command value correction block **75** receives the motor electric current command value calculated by the motor electric current command value calculation block **74,** the value of the target acceleration that is output from the target acceleration calculation block **72,** and the value of the acceleration sensor **38** (value of the detected acceleration) that is output from the high-pass filter **73**. The motor electric current command value correction block **75** corrects the motor electric current command value such that the detected acceleration matches the target acceleration.

An overview of a method for correction is as follows.

Correction method (a): in the case where the detected acceleration is smaller than the target acceleration, the motor electric current command value correction block **75** increases the motor electric current command value by correction.

Correction method (b): in the case where the detected acceleration is maintained at the target acceleration, the motor electric current command value correction block **75** maintains the motor electric current command value.

Correction method (c): in the case where the detected acceleration is larger than the target acceleration, the motor electric current command value correction block **75** decreases the motor electric current command value by correction.

In this embodiment, PID control is used as one of processes suitable to the above-described correction method. The motor electric current command value correction block **75** uses the PID control to calculate the motor torque to be generated by the electric motor **53**. Next, the motor electric current command value correction block **75** determines the motor electric current command value that is required to generate the calculated motor torque, and finds the difference between the determined motor electric current command value and the current motor electric current command value. The difference may be of a positive value, 0, or of a negative value.

The process performed by the motor electric current command value correction block **75** will be described specifically. Now, feedback gains of a proportional element, a differential element and an integration element of the driving unit **51** are respectively represented as Kp, Kd and Ki. The current deviation at the time t is represented as e (t) .

The motor electric current command value correction block **75** determines the motor torque Fm, corresponding to the assist power to be generated, by the electric motor **53** by the following expression.

[Expression 1]

$$Fm(t) = Kp \times e(t) + Ki \times \int_0^t e(\tau)d\tau + Kd \times \frac{de(t)}{dt}$$

.

The first term of the right side represents a calculation regarding the proportional element (proportion control calculation). In general, the proportion control calculation is used to smoothly make a current value close to a target value. As the deviation is decreased, namely, as the current value is made closer to the target value, the amount of operation based on the proportion control calculation is decreased. The motor electric current command value correction block **75** determines the torque of a magnitude in proportion to the immediately previous deviation.

The second term of the right side represents a calculation regarding the integration element (integration control calculation). In the above-described proportion control calculation, the amount of operation is decreased as the current value is made closer to the target value. Therefore, the deviation remains. The integration control calculation is used to further decrease such a residual deviation. As a result of the integration control calculation, the residual deviation is temporally accumulated. When the residual deviation reaches a certain magnitude, the amount of operation may be increased to further decrease the residual deviation. The motor electric current command value correction block **75** determines the torque of a magnitude in proportion to the accumulated value of the residual deviation.

The third term of the right side represents a calculation regarding the differential element (differential control calculation). In general, the differential control calculation is used to improve the responsiveness (speed of response) when an external disturbance occurs. When the difference between the immediately previous deviation and the current deviation is increased by a sudden external disturbance, the amount of operation is increased in accordance with the difference to improve the ability of following a change caused by the external disturbance. The motor electric current command value correction block 75 determines the torque of a magnitude in proportion to the differential of the residual deviation.

The feedback gains Kp, Kd and Ki of the proportion element, the differential element and the integration element may vary in accordance with the performance of the electric motor **53,** the specifications of the power transmission mechanism of the electric assist bicycle 1, or the like. In a model at the time of designing the control system, the specifications of the electric assist bicycle **1** are deeply related with, for example, how the waste time until the rise of control response, the time constant, and the steady-state value to be converged are to be set. This is also applicable to how the feedback gains Kp, Kd and Ki are to be set.

Upon calculating the motor torque Fm by expression 1 shown above, the motor electric current command value correction block **75** finds the motor electric current command value required to generate the motor torque Fm. The relationship between the motor torque Fm and the electric current command value is available in advance as an index that represents the performance of the electric motor **53.** The motor electric current command value correction block **75** holds, in advance, a motor torque - electric current command value correspondence table, which represents the relationship. The motor electric current command value correction block **75** refers to the table to find the electric current command value required to generate the motor torque Fm obtained by expression 1. Then, the motor electric current command value correction block **75** corrects the electric current command value such that the current electric current command value becomes such a newly found electric current command value.

The left side of expression 1 shown above represents the motor torque Fm. Alternatively, the electric current command value may be directly found. In this case, the feedback gains Kp, Kd and Ki in the right side of expression 1 may be changed to values obtained in consideration of the contents of the motor torque - electric current command value correspondence table mentioned above. Feedback gains to be used to find the electric current command value from the proportion term, the integration term and the differential term regarding the residual deviation will be respectively represented as Kp', Kd' and Ki'. The motor electric current command value correction block **75** may determine an electric current command value Im(t), to be generated by the electric motor **53,** by the following expression 2.

[Expression 2]

$$\mathrm{Im}(t) = Kp' \times e(t) + Ki' \times \int_{0}^{t} e(\tau)d\tau + Kd' \times \frac{de(t)}{dt}$$

Whether the electric current command value is to be found from the motor torque Fm by use of the motor torque - electric current command value correspondence table or is to be found directly from expression 1 by changing the feedback gains is an issue of designing. Either method may be adopted.

The motor electric current command value correction block **75** outputs the motor electric current command value to the motor electric current command value correction block **76.**

Now, the motor electric current command value correction block **76** will be described. The motor electric current command value correction block **76** further corrects the motor electric current command value corrected by the motor electric current command value correction block 75. The purpose of the correction is to gradually decrease the motor torque in accordance with the vehicle speed and to improve the feel of riding in consideration of the crank rotation. Hereinafter, this will be described specifically.

The motor electric current command value correction block **76** corrects the motor electric current command value in accordance with the vehicle speed. In Japan, there is a regulation that when the vehicle speed is of a predetermined value or higher (e.g., 10 km per hour or higher), the upper limit of the assist ratio should be decreased. When the vehicle speed is 10 km per hour or higher, the upper limit of the assist ratio is gradually decreased. When the vehicle speed is 24 km per hour or higher, the assist ratio is 1:0, namely, the assist output is zero. The motor electric current command value correction block **76** determines the ratio of such gradual decrease by use of, for example, a predefined "table representing the relationship between the vehicle speed and the ratio of gradual decrease". The motor electric current command value is multiplied by the ratio of gradual decrease, so that the torque to be generated by the electric motor **53** is gradually decreased. The change in the ratio of gradual decrease may be linear or curved.

The motor electric current command value correction block **76** also corrects the motor electric current command value in accordance with the rotation speed of the crankshaft **57**. While, for example, the electric assist bicycle **1** is running at a low speed immediately before stopping, the feel of driving varies in accordance with when the generation of the assist power is stopped. For example, there is a case where the feel of driving is improved by generating slight assist power continuously even though the pedal force is substantially zero. In such a case, the rotation speed of the crankshaft **57** may be referred to, so that it is checked whether or not the rider intends to drive. While the crankshaft **57** is moving, namely, the rider is pedaling, the assist power is generated; and when the crankshaft **57** is stopped, the generation of the assist power is stopped. In this manner, the feel of driving is improved.

The motor electric current command value correction block **76** outputs the motor electric current command value to the motor driving circuit **79**. The motor driving circuit **79** supplies the electric motor **53** with an electric current of a level in accordance with the motor electric current command value.

The process performed by the motor driving circuit **79** will be described specifically.

The motor electric current command value received by the motor driving circuit **79** represents the level of the electric current to be actually caused to flow in the electric motor **53**. The motor electric current command value is considered to represent the target motor electric current value. The motor driving circuit **79** monitors and controls the amount of the electric current such that the electric current of the level indicated by the target motor electric current value flows. It is preferred that the control performed in this process is feedback control. In this embodiment, the motor driving circuit **79** performs PID control as the feedback control. The PID control is a well-known control method represented by expression 1 shown above. Thus, the details of the process will not be described. The motor driving circuit **79** may use any control method as long as the level of the electric current actually flowing may be controlled to match the motor electric current command value.

The driving unit **51** includes an electric current sensor **47** in order to monitor the electric current. The electric current sensor **47** detects a value of the electric current flowing in the electric motor **53** and outputs the value to the motor driving circuit **79**. The motor driving circuit **79** uses the output signal of the electric current sensor **47** to perform the feedback control.

The electric motor **53** shown in FIG. **2A** is a three-phase motor including three-phase (U phase, V phase and W phase) coils. The electric motor **53** is, for example, a brushless DC motor.

In the example shown in FIG. **2A,** the electric current sensor **47** detects the electric current flowing in each of the coils of the three phases (U phase, V phase and W phase). The electric current sensor **47** may detect the electric current flowing in each of the coils of only two phases, instead of the electric current flowing in each of the coils of the three phases, for the following reason. In the three-phase energization control, a sum of values of the electric currents flowing in the coils of the three phases is theoretically zero; and this relationship may be used to find the value of the electric current flowing in the coil of the remaining phase, from the values of the electric currents flowing in the coils of the two phases. In this manner, the value of the electric current flowing in each of the coils of the three phases may be acquired. In the U, V and W coils, the electric currents of sine waveforms that are shifted by 120 degrees with respect to each other flow. The "value of the electric current" generally refers to the amplitude of the waveform, and may be represented as the difference P-P (Peak to Peak) between the maximum value and the minimum value of the electric current. A method for calculating the difference P-P from an actual measurement value of the electric current is well-known. The motor driving circuit **79** may substitute two actual measurement values of the electric currents, detected by the electric current sensor **47,** into a predetermined calculation expression to find the difference P-P.

The storage block **77** is a storage device provided in the calculation circuit **71**. An example of the storage block **77** is a ROM or a flash memory, which is a nonvolatile memory, a RAM, which is a volatile memory, a buffer, or a register. The storage block **77** stores the data on the acceleration calculation rule **77a** described above.

With the above-described process, the calculation circuit **71** may rotate the electric motor **58** at such an assist ratio that decreases the deviation in the acceleration.

Now, the process performed by the control device **70** in the driving unit **51** will be described in detail.

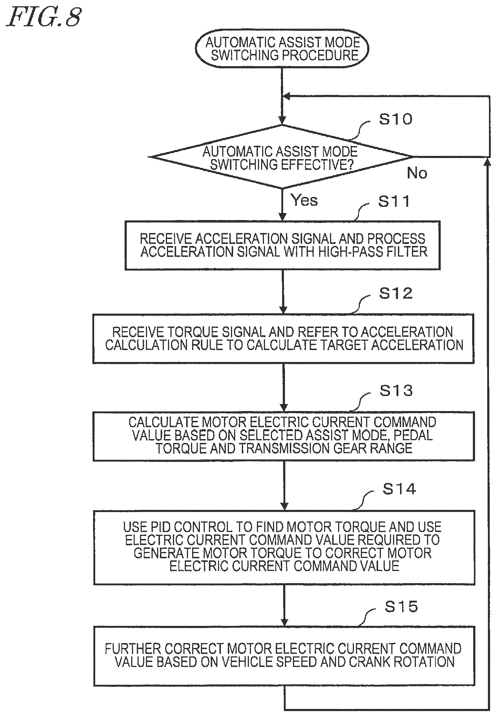

FIG. **8** is a flowchart showing a procedure performed by the control device **70.**

In step **S10,** the control device **70** determines whether or not the automatic assist mode switching is effective. Only when the automatic assist mode switching is effective, the control device **70** advances the procedure to the next step, i.e., step **S11**. The process performed in the case where the determination result is "No" in step **S10** is set with an assumption that the rider fixes the assist mode. In such a case, it is not necessary to operate the electric assist bicycle **1** against the intention of the rider. A mode in which the automatic assist mode switching is effective, and a mode in which automatic assist mode switching is ineffective, may be switched to each other by a hardware button or a software process. In the latter case, it may be determined whether or not the electric assist bicycle **1** is in a lock mode, in which the assist mode switching is prohibited by pressing and holding down the power source button **65.** Instead of, or in addition to, determining whether or not the automatic assist mode switching is effective, the control device **70** may be set such that a mode in which the assist power is permitted to be adjusted in accordance with the deviation in the acceleration described below, and a mode in which the assist power is not permitted to be adjusted, are switchable to each other. Such modes may also be switched to each other by a hardware button or a software process.

In step **S11,** the averaging circuit **78** receives an acceleration signal from the acceleration sensor **38.** The averaging circuit **78** smooths the acceleration signal and outputs the resultant signal to the high-pass filter **73.** The high-pass filter **73** transmits a high-frequency component of a predefined frequency or higher from the smoothed acceleration signal to remove a frequency component of a frequency lower than the predefined frequency. In the case where the averaging circuit **78** is not provided, the acceleration signal that is output from the acceleration sensor **38** may be input to the high-pass filter **73** with no process being made on the acceleration signal.

In step **S12,** the target acceleration calculation block **72** receives a torque signal that is output from the torque sensor **41,** and refers to the acceleration calculation rule **77a** stored on the storage block **77** to calculate the target acceleration from the value of the torque signal. In the case where the acceleration calculation rule **77a** includes, for example, a plurality of functions that may change in accordance with the assist mode as shown in FIG. **7,** the target acceleration calculation block **72** receives information representing the currently selected assist mode from the operation panel **60.**

In step **S13,** the motor electric current command value calculation block **74** calculates the motor electric current command value based on the selected assist mode, the pedal torque and the transmission gear range.

In step **S14,** the motor electric current command value correction block **75** uses expression 1 shown above to calculate the motor torque Fm(t). The motor electric current command value correction block **75** also refers to the motor torque - electric current command value correspondence table prepared in advance to find the electric current command value required to generate the motor torque. The motor electric current command value correction block **75** uses the obtained electric current command value to correct the motor electric current command value.

In step **S15,** the motor electric current command value correction block **76** further corrects the electric current command value, corrected by the motor electric current command value correction block **75,** based on the vehicle speed and the crank rotation.

The electric current command value further corrected by the motor electric current command value correction block **76** is transmitted to the motor driving circuit **79,** and the motor driving circuit **79** causes an electric current to flow in the electric motor **53.** As a result, the rotation motor **53** is rotated to generate the motor torque Fm(t) found above.

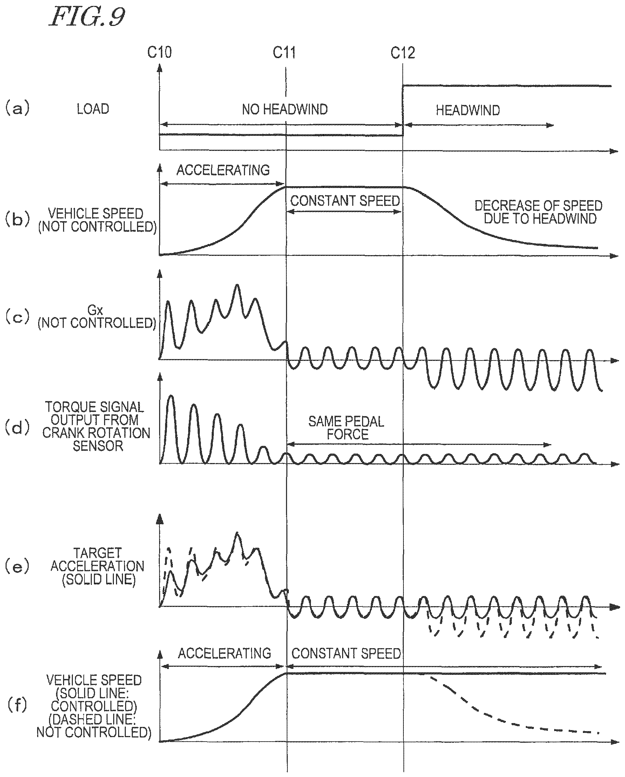

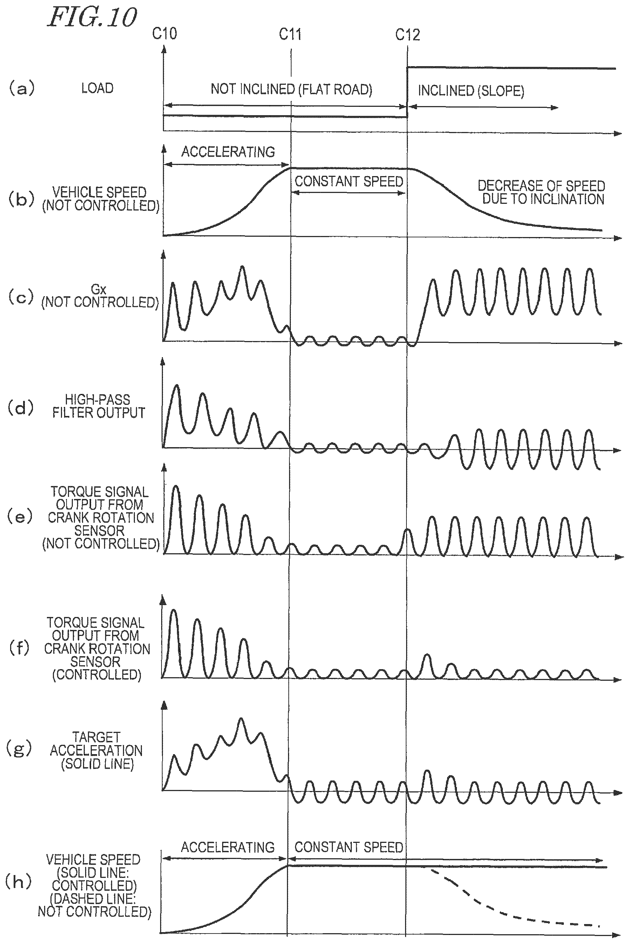

Now, with reference to FIG. **9** and FIG. **10,** waveforms of various signals during the above-described process will be described specifically. In each of FIG. **9** and FIG. **10,** the horizontal axis represents the time. The time passes in a direction from left to right in the figures.

FIG. **9** shows waveforms of various signals when a load change occurs while the rider is pedaling the electric assist bicycle **1** in the certain pedaling manner. The load change is assumed to be caused by a headwind occurring while the electric assist bicycle **1** is running on a flat road. The situation shown in FIG. **9** corresponds to FIG. **5A** referred to above.

In FIG. **9(a),** the vertical axis represents the magnitude of the load received by the electric assist bicycle **1** and the rider thereof. In FIG. **9(b),** the vertical axis represents the vehicle speed in the travel direction of the vehicle. In state **C12** and thereafter, FIG. **9(b)** shows the vehicle speed in the case where the process according to this embodiment is not performed. In FIG. **9(c),** the vertical axis represents the acceleration signal Gx in the x-axis direction that is output from the acceleration sensor **38.** In state **C12** and thereafter, FIG. **9(c)** shows a waveform of the vehicle acceleration signal Gx in the x-axis direction in the case where the control according to this embodiment is not performed.

In FIG. **9(d),** the vertical axis represents the torque signal that is output from the crank rotation sensor **42.** In FIG. **9(e),** the vertical axis represents the target acceleration (solid line), in the travel direction of the vehicle, found from the torque signal. In FIG. **9(f),** the vertical axis represents the vehicle speed (solid line) in the travel direction of the vehicle in the case where the control according to this embodiment is performed. For reference, FIG. **9(e)** and FIG. **9(f)** also show, with the dashed lines, the waveform of the actual acceleration signal Gx in the x-axis direction and the waveform of the vehicle speed, respectively, in the case where the control according to this embodiment is not performed.

In state **C10,** the electric assist bicycle **1** is at a stop on a flat road. From this state, the rider steps on the pedal **55** to start the electric assist bicycle **1.** At the time of start, the rider strongly steps on the pedal **55,** and therefore, the torque generated at the crankshaft **57** is large (FIG. **9(d))** and the vehicle acceleration is also large (FIG. **9(c)).** Then, as the speed increases, the rider decreases the pedal force, and the peak of the torque generated at the crankshaft **57** is gradually decreased (FIG. **9(d)).** In step **C11** and thereafter, the rider determines that the electric assist bicycle **1** has reached the speed desired by him/her, and starts rotating the pedal **55** in the certain pedaling manner. As a result, in state **C11** and thereafter, the torque signal changes periodically (FIG. **9(d)).**

As shown in FIG. **9(e),** in this example, the target acceleration is found between state **C10** and state **C11.** This is not indispensable. The target acceleration merely needs to be calculated after the rider starts pedaling the electric assist bicycle **1** in the certain pedaling manner, namely, in state **C11** or thereafter. The target acceleration between state **C10** and state **C11** is defined by a rule different from the acceleration calculation rule **77a** shown in FIG. **6.** This rule is not directly related to the present invention and thus will not be described.

Between state **C11** and state **C12,** the rider pedals the electric assist bicycle 1 in the certain pedaling manner (FIG. **9(d)).** The vehicle speed is kept the same (FIG. **9(b),** FIG. **9(f)),** and the acceleration of the vehicle changes periodically (FIG. **9(c)).**

State **C12** is assumed to be a state where a headwind occurs (FIG. **9(a)).** Usually, in the case where the rider keeps on pedaling the electric assist bicycle with the same pedal force against the headwind, the trough of the waveform of the acceleration further drops (FIG. **9(c))** and the vehicle speed is decreased (FIG. **9(b)).**

However, in state **C12** and thereafter, the target acceleration calculation block **72** sets a target acceleration equivalent to the target acceleration between states **C11** and **C12** based on the pedal force generated by the certain pedaling manner. The motor electric current command value correction block **75** increases the assist power to be generated by the electric motor **53** such that the acceleration represented by the solid line in FIG. **9(e),** not the acceleration represented by the dashed line, is obtained in state **C12** and thereafter. With such an arrangement, even if the pedal force of the rider in state **C12** and thereafter is equivalent to the pedal force of the rider between states **C11** and **C12,** the vehicle speed is not decreased. The rider may maintain the vehicle speed by pedaling in the certain pedaling manner even if the headwind occurs. Namely, the rider may drive the electric assist bicycle **1** with the same sense of acceleration regardless of whether there is a headwind or not.

FIG. **10** shows waveforms of various signals when a load change occurs while the rider is pedaling the electric assist bicycle **1.** The load change is assumed to be caused when the flat road is changed to a slope. The situation shown in FIG. **10** corresponds to FIG. 5B referred to above.

In each of FIG. **10(a)** through FIG. **10(h),** the horizontal axis represents the time. In FIG. **10(a),** the vertical axis represents the magnitude of the load received by the electric assist bicycle **1** and the rider thereof. In FIG. **10(b),** the vertical axis represents the vehicle speed in the travel direction of the vehicle. In state **C12** and thereafter, FIG. **10(b)** shows the vehicle speed in the case where the process according to this embodiment is not performed. In FIG. **10(c),** the vertical axis represents the acceleration signal Gx in the x-axis direction that is output from the acceleration sensor **38.** In state **C12** and thereafter, FIG. **10(c)** shows a waveform of the vehicle acceleration signal Gx in the x-axis direction in the case where the control according to this embodiment is not performed. In FIG. **10(d),** the vertical axis represents the acceleration signal having a low-frequency component removed by the high-pass filter **73.**

In FIG. **10(e),** the vertical axis represents the torque signal that is output from the crank rotation sensor **42** in the case where the process according to this embodiment is not performed. By contrast, in FIG. **10(f),** the vertical axis represents the torque signal that is output from the crank rotation sensor **42** in the case where the process according to this embodiment is performed. In FIG. **10(g),** the vertical axis **represents** the target acceleration (solid line) found from the torque signal shown in FIG. **10(f).** It should be noted that this target acceleration does not include a signal component that is caused by the slope and is added to the output of the acceleration sensor 38. In FIG. **10(h),** the vertical axis represents the vehicle speed (solid line) in the case where the control according to this embodiment is performed. For reference, FIG. **10(h)** also shows, with the dashed line, a waveform of the vehicle speed in the x-axis direction in the case where the control according to this embodiment is not performed.

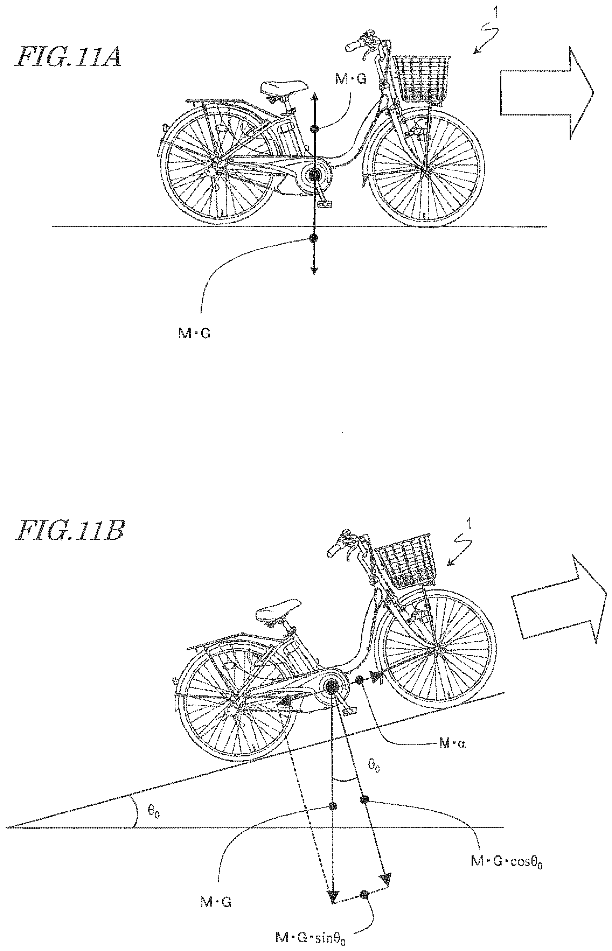

Now, with reference to FIG. **11A** and FIG. **11B,** the relationship between the acceleration signal and the inclination will be described.

FIG. **11A** is a static load correlation diagram of the electric assist bicycle **1** on a flat road. FIG. **11B** is a static load correlation diagram of the electric assist bicycle **1** on a slope having an inclination angle θ. In FIG. **11A** and FIG. **11B,** the mass of the electric assist bicycle **1** is represented by **"M",** the gravitational acceleration is represented by **"G",** the acceleration Gz in the X-axis direction is represented by "α", and the inclination angle is represented by "$\theta_0$".

FIG. **11A** will be referred to. Where the electric assist bicycle **1** is the point mass that is present at the position of the gravitational center thereof, the gravitational force **M.G** is applied to the electric assist bicycle **1** in a vertically downward direction. The acceleration sensor **38** is constantly influenced by the gravitational force. Therefore, in the state where the electric assist bicycle **1** is still, the acceleration sensor **38** detects the gravitational acceleration **G** acting in the vertically downward direction (e.g., negative direction of the Z-axis direction).

In the state where the electric assist bicycle **1** is still, the electric assist bicycle **1** receives a drag **M-G** in a vertically upward direction from the ground, which counteracts the gravitational force **M·G** in the vertically downward direction. The electric assist bicycle **1** is in a still state against the gravitational force, and therefore, the electric assist bicycle **1** is accelerating upward, in which the gravitational acceleration is counteracted. Namely, the acceleration sensor **38** detects the acceleration **G** in the vertically upward direction (positive direction of the Z-axis direction).

The situation is the same in FIG. **11B.** In the state of being still on a slope, the electric assist bicycle **1** is still against a component, of the gravitational force, in a direction going down the slope (against **M·G·sin$\theta_0$)**. Where the direction going down the slope is negative, the acceleration in this state is -G·sin$\theta_0$. The electric assist bicycle **1** still on the slope is accelerating at a magnitude of G·sin$\theta_0$ in a direction going up the slope so as to counteract the acceleration in the direction going down the slope (so as to counteract $G \cdot \sin\theta_0$). Namely, the acceleration is $+G \cdot \sin\theta_0$. Even after the electric assist bicycle 1 starts running in such a direction as to go up the slope, the acceleration $+G \cdot \sin\theta_0$ is constantly overlapped.

FIG. **10** will be referred to again.

As shown in FIG. **10(c),** the acceleration signal Gx includes a certain offset in state **C12** and thereafter. A reason for this is that the above-described acceleration of $+G \cdot \sin\theta_0$ is overlapped. The high-pass filter **73** removes the overlapped offset component $+G \cdot \sin\theta_0$. The motor electric current command value correction block **75** finds a deviation between the acceleration signal (FIG. **10(d)**) that is output from the high-pass filter **73** and the target acceleration (FIG. **10(g))**, in the travel direction of the vehicle, that is found from the torque signal (FIG. **10(f)**). The motor electric current command value correction block **75** adjusts the motor torque (assist power) to be generated by the electric motor **53** such that the deviation is decreased. Hereinafter, this will be described specifically.

First, states **C10** through **C12** are the same as states **C10** through **C12** described above with reference to FIG. **9** and thus will not be described. Between states **C11** and **C12,** the rider pedals the electric assist bicycle **1** in the certain pedaling manner (FIG. **10(d)).** The vehicle speed is constant (FIG. **10(b),** FIG. **10(f)**) and the vehicle acceleration changes periodically (FIG. **10(c)).**

State **C12** is a state where the flat road is changed to the slope (FIG. **10(a)).** Usually, in the case where the rider keeps on pedaling the electric assist bicycle on the slope with the same pedal force, the trough of the waveform of the acceleration further drops (FIG. **10(c))** and the vehicle speed is decreased (FIG. **10(b)).**

When the electric assist bicycle 1 starts running on the slope, the rider intuitively increases the pedal force. This is understood because the torque signal is increased immediately after state **C12** in FIG. 19(f) and then is gradually decreased.

The target acceleration calculation block **72** calculates the target acceleration based on the pedal force (torque signal). The motor electric current command value calculation block **74** calculates the motor electric current command value based on the selected assist mode, the pedal torque and the transmission gear range.

The motor electric current command value correction block **75** finds the deviation between the target acceleration calculated by the target acceleration calculation block **72** and the current acceleration that is output from the high-pass filer **73**. The motor electric current command value correction block **75** uses the process represented by expression 1 shown above to determine the magnitude of the motor torque to be generated by the electric motor **53** such that the obtained deviation is decreased. The determined motor torque is larger than the motor torque while the electric assist bicycle **1** is running on the flat road. The motor electric current command value is corrected such that such a torque is generated, and the motor electric current command value is further corrected by the motor electric current command value correction block **76.** With such an arrangement, even if the pedal force of the rider in state **C12** and thereafter is equivalent to the pedal force of the rider between states **C11** and **C12,** the vehicle speed is maintained (FIG. **10(h)).** The rider may maintain the vehicle speed by pedaling in the certain pedaling manner even while going up the slope. Namely, the rider may drive the electric assist bicycle **1** with the same sense of acceleration regardless of whether there is a slope or not.

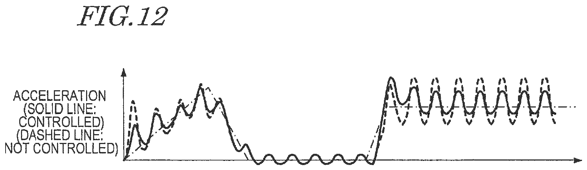

FIG. **12** shows the acceleration signal as a target for the case where the low-frequency component is not removed by the high-pass filter **73** (solid line). FIG. 12 also shows the acceleration signal in the case where the process according to this embodiment is not performed (dashed line).

In the above-described process, the acceleration signal having the low-frequency component removed by the high-pass filter **73** is used. However, the result is the same even in the case where the target acceleration value is set as represented by the solid line in FIG. **12.** The use of the high-pass filter **73** realizes the same process as that in the case where the headwind or the like occurs, regardless of whether the electric assist bicycle 1 is running on a slope or not.

In the above, the motor electric current command value correction block **75** is described as determining the motor torque by use of expression 1. In another example, the motor electric current command value correction block **75** may determine the motor torque in accordance with the magnitude of the deviation **En** in the acceleration.

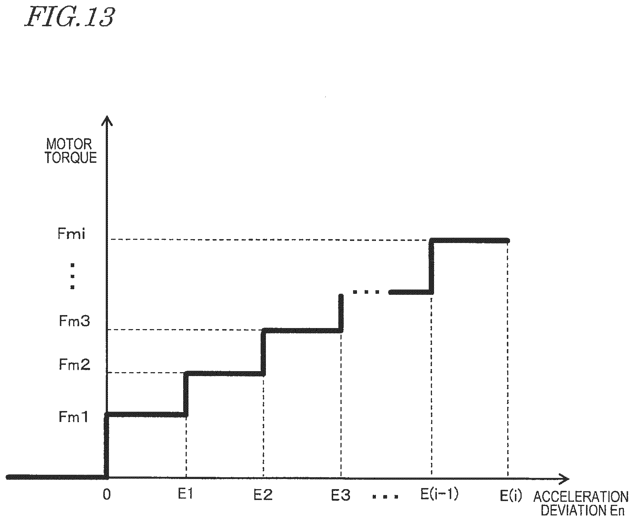

FIG. **13** shows a motor torque in accordance with the magnitude of the deviation in the acceleration. According to this table, the motor torque Fm may be determined in accordance with the value of the deviation **En** in the acceleration. More specifically, when En < 0, the motor torque Fm = 0, when $0 \leq En < E1$, Fm = Fm1, when $E1 \leq En < E2$, Fm = Fm2, ... when $E(i-1) \leq En < E(i)$, Fm = Fmi.

The above-described two types of methods for determining the motor torque are examples and do not limit the present invention.

In the above-described example, while there is a headwind and while the electric assist bicycle **1** is going up a slope, the control device **70** increases the assist power to be generated by the electric motor **53**. By contrast, in the case where the rider rotates the pedal **55** with a smaller torque when there is a tailwind or while the electric assist bicycle **1** is going down the slope, the target acceleration is decreased. Therefore, the motor electric current command value correction block **75** of the control device **70** decreases the assist power to be generated by the electric motor **53**. The above-described process is applicable to the case where the load applied to the electric assist bicycle **1** and the rider thereof is decreased, as well as to the case where a heavy load is applied to the electric assist bicycle **1** and the rider thereof.

Some embodiments of the present invention have been described. The above description of the embodiments provides an illustrative example of the present invention, but does not limit the present invention. An embodiment in which elements described in the above-described embodiments are combined appropriately may be provided. The elements may be, for example, modified, replaced, added or deleted within the scope of the claims of the present invention and equivalents thereof.

As described above, an illustrative electric assist system (driving unit **51**) according to the present invention is usable for an electric assist vehicle (electric assist bicycle **1**) including the pedal **55.** The electric assist system includes the crankshaft **57** rotatable by human power of a rider applied to the pedal; the torque sensor **41** outputting a torque signal in accordance with a magnitude of a torque generated at the crankshaft; the electric motor **53** generating assist power assisting the human power of the rider; the acceleration sensor **38** outputting an acceleration signal in accordance with a current acceleration in a travel direction of the electric assist vehicle; and the control device **70** receiving the torque signal and the acceleration signal and determining a magnitude of the assist power to be generated by the electric motor. The control device calculates a target acceleration from the torque signal based on a rule prepared in advance, and determines the magnitude of the assist power to be generated by the electric motor such that a deviation between the target acceleration and the current acceleration is decreased.

Because of the structure of the bicycle of allowing the rider to have his/her foot step on, and rotate, the pedal, the magnitude of the human power of the rider applied to the pedal changes in accordance with the position of the pedal while the rider is rotating the pedal. Therefore, the acceleration in the travel direction of the electric assist bicycle changes in accordance with the position of the pedal while the rider is rotating the pedal. The electric assist system changes the magnitude of the assist power to be generated by the electric motor such that the deviation between the target acceleration found from the pedal force of the rider and the current acceleration of the vehicle is decreased. Even if a load is applied during the running, the pedal force of the rider is considered to represent the sense of acceleration desired by the rider. Therefore, the target acceleration is set based on the pedal force, and the current acceleration of the vehicle is controlled to be made closer to the target acceleration. With such an arrangement, the rider may run the electric assist vehicle with an appropriate magnitude of assist power in accordance with the load during the running.

In an embodiment, the control device **70** performs PID control to determine the magnitude of the assist power to be generated by the electric motor **53** and thus to decrease the deviation.

In an embodiment, where a current deviation at current time t is represented as E(t), and feedback gains of a proportional element, a differential element and an integration element of the assist power control system are respectively represented as Kp, Kd and Ki, the control device **70** may determine a motor torque Fm, corresponding to the assist power to be generated by the electric motor **53,** by the following expression:

[Expression 1]

$$Fm(t) = Kp \times e(t) + Ki \times \int_0^t e(\tau)d\tau + Kd \times \frac{de(t)}{dt}$$

In an embodiment, the control device **70** may determine the magnitude of the assist power to be generated by the electric motor **53** such that the deviation is made closer to 0.

In any of the above-described embodiments, the ability of making the acceleration closer to the target acceleration may be improved.

In an embodiment, the control device **70** stores, in advance, a table associating a command value for an electric current that is to flow in the electric motor **53** and a magnitude of a motor torque corresponding to the assist power to be generated by the electric motor to each other, and refers to the table to determine the command value for the electric current require to generate the motor torque.

In an embodiment, the control device **70** stores, in advance, a table associating a command value for an electric current that is to flow in the electric motor **53** and a magnitude of a motor torque to each other for each of ranges of magnitudes of the deviation, and refers to the table to determine the command value for the electric current required to generate the motor torque.

In an embodiment, where a current deviation at current time t is represented as E(t), and feedback gains usable to find a command value for an electric current from a proportion term, an integration term and a differential term regarding a residual deviation are respectively represented as Kp', Kd' and Ki', the control device **70** determines the command value Im, for the electric current that is to flow in the electric motor, by the following expression:

[Expression 2]

$$Im(t) = Kp' \times e(t) + Ki' \times \int_0^t e(\tau)d\tau + Kd' \times \frac{de(t)}{dt}$$

In an embodiment, the control device **70** includes the storage device **77** holding the rule prepared in advance.

In an embodiment, the rule may be a map or a function defining the correspondence between the torque signal and the target acceleration.

In an embodiment, the function may be a nonlinear function or a linear function.

In an embodiment, the control device **70** includes the high-pass filter **73** transmitting a high-frequency component of a predefined frequency or higher that is included in the received acceleration signal.

In an embodiment, the control device **70** includes the high-pass filter **73** transmitting a high-frequency component of 5 Hz or higher.

The high-pass filter **73** may be provided, so that the acceleration generated by the rider rotating the pedal **55** is appropriately extracted.

In an embodiment, during a time period in which the rider rotates the pedal **55** to make one rotation of the crankshaft **57,** the torque sensor **41** and the acceleration sensor **38** respectively output a torque signal and an acceleration signal a plurality of times or continuously, and the control device **70** determines the magnitude of the assist power to be generated by the electric motor **53** a plurality of times or temporally continuously.

In an embodiment, during a time period in which the rider rotates the pedal **55** to make one rotation of the crankshaft **57,** the torque signal changes in accordance with the rotation of the crankshaft that is associated with an operation of the rider rotating the pedal, the acceleration signal changes in accordance with the operation of the rider rotating the pedal and an external disturbance applied to the electric assist vehicle (electric assist bicycle **1),** and the control device **70,** at a predefined timing, calculates the target acceleration from the torque signal, calculates the acceleration from the acceleration signal, and determines the magnitude of the assist power to be generated by the electric motor **53.**

In an embodiment, the electric assist system (driving unit **51**) further includes the motor driving circuit **79** outputting, to the electric motor, an electric current having at least one of an amplitude, a frequency and a flow direction controlled in accordance with a command value. The control device **70** outputs, to the motor driving circuit **79,** a command value usable to cause an electric current that is in accordance with the determined magnitude of the assist power to flow. With such an arrangement, an appropriate magnitude of assist power may be generated such that the target acceleration in accordance with the pedal force during the running is obtained.

An electric assist vehicle (electric assist bicycle **1**) according to an illustrative embodiment of the present invention includes the above-described electric assist system (driving unit **51).** In an embodiment, the electric assist vehicle includes the front wheel **25** and the rear wheel **26;** and the power transmission mechanism **31** transmitting the human power of the rider and the assist power to the rear wheel. The electric assist vehicle including the electric assist system according to an illustrative embodiment of the present invention may generate appropriate magnitude of assist power such that the target acceleration in accordance with the pedal force during the running is obtained.

## INDUSTRIAL APPLICABILITY

The present invention is especially useful for a vehicle that includes an acceleration sensor and is driven by human power assisted by assist power.

## REFERENCE SIGNS LIST

**1:** electric assist bicycle; **5:** down tube; **6:** bracket; **7:** chain stay; **8:** brake; **9:** brake; **11:** vehicle frame; **12:** head pipe; **13:** handle stem; **14:** handle; **15:** front fork; **16:** seat tube; **17:** saddle pipe; **18:** fender; **19:** seat stay; **21:** front basket; **22:** head lamp; **23:** tail lamp; **24:** rack; **25:** front wheel; **26:** rear wheel; **27:** saddle; **28:** chain; **29:** stand; **31:** power transmission mechanism; **35:** speed sensor; **38:** acceleration sensor; **41:** torque sensor; **42:** crank rotation sensor;

**46:** motor rotation sensor; **51:** driving unit; **53:** electric motor; **54:** crank arm; **55:** pedal; **56:** battery; **57:** crankshaft; **60:** operation panel; **61:** display panel; **62:** assist mode operation switch; **63:** speaker; **64:** lamp; **65:** power source switch; **70:** control device; **71:** calculation circuit; **72:** target acceleration calculation block; **73:** high-pass filter; **74:** motor electric current command value calculation block; **75:** (first) motor electric current command value correction blocks; **76:** (second) motor electric current command value correction blocks; **77:** storage device; **78:** averaging circuit; **79:** motor driving circuit

**Claims**

1. An electric assist system (51) usable for an electric assist vehicle (1) including a pedal (55), the electric assist system (51) comprising:

    a crankshaft (57) rotatable by human power of a rider applied to the pedal (55);
    a torque sensor (41) outputting a torque signal in accordance with a magnitude of a torque generated at the crankshaft (57);
    an electric motor (53) generating assist power assisting the human power of the rider;
    an acceleration sensor (38) outputting an acceleration signal in accordance with a current acceleration in a travel direction (x) of the electric assist vehicle (1); and
    a control device (70) receiving the torque signal and the acceleration signal and determining a magnitude of the assist power to be generated by the electric motor (53), wherein the control device (70) calculates a target acceleration from the torque signal based on a rule prepared in advance, and determines the magnitude of the assist power to be generated by the electric motor (53) such that a deviation between the target acceleration and the current acceleration is decreased, **characterized in that**, during a time period in which the rider rotates the pedal (55) to make one rotation of the crankshaft (57),
    the torque sensor (41) and the acceleration sensor (38) respectively output a torque signal and an acceleration signal continuously, and
    the control device (70) determines the magnitude of the assist power to be generated by the electric motor (53) temporally continuously.

2. The electric assist system (51) of claim 1, wherein the control device (70) performs PID control to determine the magnitude of the assist power to be generated by the electric motor (53) and thus to decrease the deviation.

3. The electric assist system (51) of claim 2, wherein where a current deviation at current time t is represented as E(t), and feedback gains of a proportional element, a differential element and an integration element of the assist power control system are respectively represented as Kp, Kd and Ki,
    the control device (70) determines a motor torque Fm, corresponding to the assist power to be generated, by the electric motor (53) by:

    [Expression 1]

$$Fm(t) = Kp \times e(t) + Ki \times \int_{0}^{t} e(\tau)d\tau + Kd \times \frac{de(t)}{dt}$$

4. The electric assist system (51) of any one of claims 1 through 3, wherein the control device (70) determines the magnitude of the assist power to be generated by the electric motor (53) such that the deviation is made closer to 0.

5. The electric assist system (51) of any one of claims 1 through 4, wherein the control device (70) stores, in advance, a table associating a command value for an electric current that is to flow in the electric motor (53) and a magnitude of a motor torque corresponding to the assist power to be generated by the electric motor (53) to each other, and refers to the table to determine the command value for the electric current required to generate the motor torque.

6. The electric assist system (51) of claim 4, wherein the control device (70) stores, in advance, a table associating a command value for an electric current that is to flow in the electric motor (53) and a magnitude of a motor torque to each other for each of ranges of magnitudes of the deviation, and refers to the table to determine the command value for the electric current required to generate the motor torque.

7. The electric assist system (51) of claim 2, wherein where a current deviation at current time t is represented as E(t), and feedback gains usable to find a command value for an electric current from a proportion term, an integration term and a differential term regarding a residual deviation are respectively represented as Kp', Kd' and Ki', the control device (70) determines the command value Im, for the electric current that is to flow in the electric motor (53), by:

[Expression 2]

$$ \mathrm{Im}(t) = Kp' \times e(t) + Ki' \times \int_{0}^{t} e(\tau)d\tau + Kd' \times \frac{de(t)}{dt} $$

.

8. The electric assist system (51) of any one of claims 1 through 7, wherein the control device (70) includes a storage device (77) holding the rule prepared in advance.

9. The electric assist system (51) of claim 8, wherein the rule is a map or a function defining the correspondence between the torque signal and the target acceleration.

10. The electric assist system (51) of claim 9, wherein the function is a nonlinear function or a linear function.

11. The electric assist system (51) of any one of claims 1 through 10, wherein the control device (70) includes a high-pass filter (73) transmitting a high-frequency component of a predefined frequency or higher that is included in the received acceleration signal.

12. The electric assist system (51) of claim 11, wherein the control device (70) includes a high-pass filter (73) transmitting a high-frequency component of 5 Hz or higher.

13. The electric assist system (51) of any one of claims 1 through 12, wherein during a time period in which the rider rotates the pedal (55) to make one rotation of the crankshaft (57), the torque signal changes in accordance with the rotation of the crankshaft (57) that is associated with an operation of the rider rotating the pedal (55),

the acceleration signal changes in accordance with the operation of the rider rotating the pedal (55) and an external disturbance applied to the electric assist vehicle (1), and
the control device (70), at a predefined timing, calculates the target acceleration from the torque signal, calculates the acceleration from the acceleration signal, and determines the magnitude of the assist power to be generated by the electric motor (53).

14. The electric assist system (51) of any one of claims 1 through 13, further comprising a motor driving circuit (79) outputting, to the electric motor (53), an electric current having at least one of an amplitude, a frequency and a flow direction controlled in accordance with a command value,
wherein the control device (70) outputs, to the motor driving circuit (79), a command value usable to cause an electric current that is in accordance with the determined magnitude of the assist power to flow.

15. An electric assist vehicle (1), comprising the electric assist system (51) of claim 14.

16. The electric assist vehicle (1) of claim 15, further comprising:

a front wheel (25) and a rear wheel (26); and
a power transmission mechanism (31) transmitting the human power of the rider and the assist power to the rear wheel (26).

**Patentansprüche**

1. Ein Elektro-Unterstützungs-System (51), das für ein elektrisch-unterstütztes Fahrzeug (1) verwendet werden kann, das ein Pedal (55) enthält, das Elektro-Unterstützungs-System (51) umfasst:

    eine Kurbelwelle (57), die durch menschliche Kraft eines Fahrers, die auf das Pedal (55) einwirkt, drehbar ist;
    einen Drehmomentsensor (41), der ein Drehmomentsignal in Abhängigkeit von der Größe eines Drehmoments, das an der Kurbelwelle (57) erzeugt ist, ausgibt;
    einen Elektromotor (53), der eine Unterstützungskraft erzeugt, welche die menschliche Kraft des Fahrers unterstützt;
    einen Beschleunigungssensor (38), der ein Beschleunigungssignal in Übereinstimmung mit einer aktuellen Beschleunigung in einer Fahrtrichtung (x) des elektrisch-unterstützten Fahrzeugs (1) ausgibt; und
    eine Steuervorrichtung (70), die das Drehmomentsignal und das Beschleunigungssignal empfängt und eine Größe der Unterstützungsleistung, die von dem Elektromotor (53) zu erzeugen ist, bestimmt,
    wobei die Steuervorrichtung (70) eine Zielbeschleunigung aus dem Drehmomentsignal auf der Grundlage einer im Voraus vorbereiteten Regel berechnet und die Größe der Unterstützungsleistung, die von dem Elektromotor (53) zu erzeugen ist, bestimmt, so dass eine Abweichung zwischen der Zielbeschleunigung und der aktuellen Beschleunigung verringert wird, **dadurch gekennzeichnet, dass** während eines Zeitraums, in dem der Fahrer das Pedal (55) dreht, um eine Umdrehung der Kurbelwelle (57) durchzuführen,
    der Drehmomentsensor (41) und der Beschleunigungssensor (38) jeweils ein Drehmomentsignal und ein Beschleunigungssignal kontinuierlich ausgeben, und
    die Steuervorrichtung (70) die Größe der Unterstützungsleistung, die von dem Elektromotor (53) zu erzeugen ist, temporär kontinuierlich bestimmt.

2. Das Elektro-Unterstützungs-System (51) gemäß Anspruch 1, wobei die Steuervorrichtung (70) eine PID-Regelung durchführt, um die Größe der Unterstützungsleistung, die von dem Elektromotor (53) zu erzeugen ist, zu bestimmen und somit die Abweichung zu verringern.

3. Das Elektro-Unterstützungs-System (51) gemäß Anspruch 2, wobei eine Stromabweichung zum aktuellen Zeitpunkt t als E(t) dargestellt ist, und Rückkopplungsverstärkungen eines Proportionalelements, eines Differentialelements und eines Integrationselements des Unterstützungskraftsteuerungssystems jeweils als Kp, Kd und Ki dargestellt werden,
die Steuervorrichtung (70) bestimmt ein Motordrehmoment Fm entsprechend zu der Unterstützungsleistung, die durch den Elektromotor (53) zu erzeugen ist, durch:

    [Ausdruck 1]

$$Fm(t) = Kp \times e(t) + Ki \times \int_0^t e(\tau)d\tau + Kd \times \frac{de(t)}{dt}$$

4. Das Elektro-Unterstützungs-System (51) gemäß irgendeinem der Ansprüche 1 bis 3, wobei die Steuervorrichtung (70) die Größe der Unterstützungsleistung, die von dem Elektromotor (53) zu erzeugen ist, bestimmt, so dass die Abweichung näher an 0 gebracht wird.

5. Das Elektro-Unterstützungs-System (51) gemäß irgendeinem der Ansprüche 1 bis 4, wobei die Steuervorrichtung (70) im Voraus eine Tabelle speichert, die einen Sollwert für einen elektrischen Strom, der in dem Elektromotor (53) fließen soll, und eine Größe eines Motordrehmoments, das der Unterstützungsleistung, die von dem Elektromotor (53) zu erzeugen ist, entspricht, einander zuordnet, und sich auf die Tabelle bezieht, um den Sollwert für den elektrischen Strom zu bestimmen, der erforderlich ist, um das Motordrehmoment zu erzeugen.

6. Das Elektro-Unterstützungs-System (51) gemäß Anspruch 4, wobei die Steuervorrichtung (70) im Voraus eine Tabelle speichert, die einen Sollwert für einen elektrischen Strom, der in dem Elektromotor (53) fließen soll, und eine Größe eines Motordrehmoments für jeden der Bereiche von Größen der Abweichung einander zuordnet, und sich auf die Tabelle bezieht, um den Sollwert für den elektrischen Strom zu bestimmen, der erforderlich ist, um das Motordrehmoment zu erzeugen.

7. Das Elektro-Unterstützungs-System (51) gemäß Anspruch 2, wobei eine Stromabweichung zum aktuellen Zeitpunkt t als E(t) dargestellt ist, und Rückkopplungsverstärkungen die zum Finden eines Sollwerts für einen elektrischen Strom aus einem Proportionsterm, einem Integrationsterm und einem Differentialterm bezüglich einer Restabweichung verwendet werden können, als Kp', Kd' und Ki' dargestellt werden, die Steuervorrichtung (70) bestimmt den Sollwert Im für den elektrischen Strom, der im Elektromotor (53) fließen soll, durch:

[Ausdruck 2]

$$\mathrm{Im}(t) = Kp' \times e(t) + Ki' \times \int_0^t e(\tau)d\tau + Kd' \times \frac{de(t)}{dt}$$

8. Das Elektro-Unterstützungs-System (51) gemäß irgendeinem der Ansprüche 1 bis 7, wobei die Steuervorrichtung (70) eine Speichereinrichtung (77) enthält, welche die vorbereitete Regel enthält.

9. Das Elektro-Unterstützungs-System (51) gemäß Anspruch 8, wobei die Regel ein Kennfeld oder eine Funktion ist, welche die Entsprechung zwischen dem Drehmomentsignal und der Zielbeschleunigung definiert.

10. Das Elektro-Unterstützungs-System (51) gemäß Anspruch 9, wobei die Funktion eine nichtlineare Funktion oder eine lineare Funktion ist.

11. Das Elektro-Unterstützungs-System (51) gemäß irgendeinem der Ansprüche 1 bis 10, wobei die Steuervorrichtung (70) einen Hochpassfilter (73) enthält, der eine Hochfrequenzkomponente mit einer vordefinierten Frequenz oder höher überträgt, die in dem empfangenen Beschleunigungssignal enthalten ist.

12. Das Elektro-Unterstützungs-System (51) gemäß Anspruch 11, wobei die Steuervorrichtung (70) einen Hochpassfilter (73) enthält, der eine Hochfrequenzkomponente von 5 Hz oder höher überträgt.

13. Das Elektro-Unterstützungs-System (51) gemäß irgendeinem der Ansprüche 1 bis 12, wobei während einer Zeitspanne, in welcher der Fahrer das Pedal (55) dreht, um eine Umdrehung der Kurbelwelle (57) durchzuführen,

das Drehmomentsignal sich in Abhängigkeit von der Drehung der Kurbelwelle (57) ändert, die mit einer Betätigung des Pedals (55) durch den Fahrer verbunden ist,
das Beschleunigungssignal sich in Abhängigkeit von der Betätigung des Fahrers, der das Pedal (55) dreht, und einer externen Störung, die auf das elektrisch-unterstützte Fahrzeug (1) einwirkt, ändert, und
die Steuervorrichtung (70) zu einem vordefinierten Zeitpunkt die Zielbeschleunigung aus dem Drehmomentsignal berechnet, die Beschleunigung aus dem Beschleunigungssignal berechnet und die Größe der Unterstützungsleistung, die von dem Elektromotor (53) zu erzeugen ist, bestimmt.

14. Das Elektro-Unterstützungs-System (51) gemäß irgendeinem der Ansprüche 1 bis 13, das weiterhin eine Motorsteuerungsschaltung (79) umfasst, die an den Elektromotor (53) einen elektrischen Strom ausgibt, dessen Amplitude, Frequenz und/oder Flussrichtung in Übereinstimmung mit einem Sollwert gesteuert wird,
wobei die Steuervorrichtung (70) an die Motoransteuerungsschaltung (79) einen Sollwert ausgibt, der dazu geeignet ist, einen elektrischen Strom fließen zu lassen, der mit der ermittelten Größe der Unterstützungsleistung übereinstimmt.

15. Ein elektrisch-unterstütztes Fahrzeug (1), welches das Elektro-Unterstützungs-System (51) gemäß Anspruch 14 umfasst.

16. Das elektrisch-unterstützte Fahrzeug (1) gemäß Anspruch 15, das weiterhin umfasst:

ein Vorderrad (25) und ein Hinterrad (26); und
einen Kraftübertragungsmechanismus (31), der die menschliche Kraft des Fahrers und die Unterstützungskraft auf das Hinterrad (26) überträgt.

**Revendications**

1.  Système d'assistance électrique (51) utilisable pour un véhicule à assistance électrique (1) incluant une pédale (55), le système d'assistance électrique (51) comprenant :

    une manivelle (57) mobilisable en rotation par une puissance musculaire d'un cycliste appliquée à la pédale (55) ;
    un capteur de couple (41) produisant un signal de couple conformément à une amplitude d'un couple généré au niveau de la manivelle (57) ;
    un moteur électrique (53) générant une puissance d'assistance assistant la puissance musculaire du cycliste ;
    un capteur d'accélération (38) produisant un signal d'accélération conformément à une accélération courante dans une direction de déplacement (x) du véhicule à assistance électrique (1) ; et
    un dispositif de commande (70) recevant le signal de couple et le signal d'accélération et déterminant une amplitude de la puissance d'assistance à générer par le moteur électrique (53),
    dans lequel le dispositif de commande (70) calcule une accélération cible à partir du signal de couple selon une règle préparée à l'avance, et détermine l'amplitude de la puissance d'assistance à générer par le moteur électrique (53) de sorte qu'une dérive entre l'accélération cible et l'accélération courante soit diminuée, **caractérisé en ce que**,
    au cours d'une période temporelle dans laquelle le cycliste fait tourner la pédale (55) pour effectuer une rotation de la manivelle (57), le capteur de couple (41) et le capteur d'accélération (38) produisent respectivement un signal de couple et un signal d'accélération continuellement, et
    le dispositif de commande (70) détermine l'amplitude de la puissance d'assistance à générer par le moteur électrique (53) temporellement continuellement.

2.  Le système d'assistance électrique (51) de la revendication 1, dans lequel le dispositif de commande (70) exécute un contrôle PID pour déterminer l'amplitude de la puissance d'assistance à générer par le moteur électrique (53) et ainsi pour diminuer la dérive.

3.  Le système d'assistance électrique (51) de la revendication 2, dans lequel une dérive courante à un moment courant t est représentée comme E(t), et des gains de réinjection d'un élément proportionnel, un élément différentiel et un élément d'intégration du système de commande de puissance d'assistance sont respectivement représentés comme Kp, Kd et Ki,
    le dispositif de commande (70) détermine un couple de moteur Fm, correspondant à la puissance d'assistance à générer, par le moteur électrique (53) par :

    [Expression 1]

    $$Fm(t) = Kp \times e(t) + Ki \times \int_{0}^{t} e(\tau)d\tau + Kd \times \frac{de(t)}{dt}.$$

4.  Le système d'assistance électrice (51) de l'une quelconque des revendications 1 à 3, dans lequel le dispositif de commande (70) détermine l'amplitude de la puissance d'assistance à générer par le moteur électrique (53) de sorte que la dérive soit plus proche de 0.

5.  Le système d'assistance électrique (51) de l'une quelconque des revendications 1 à 4, dans lequel le dispositif de commande (70) stocke, à l'avance, une table associant une valeur de commande pour un courant électrique qui est appelé à circuler dans le moteur électrique (53) et une amplitude d'un couple de moteur correspondant à la puissance d'assistance à générer par le moteur électrique (53) l'une à l'autre, et fait référence à la table pour déterminer la valeur de commande pour le courant électrique requis pour générer le couple de moteur.

6. Le système d'assistance électrique (51) de la revendication 4, dans lequel le dispositif de commande (70) stocke, à l'avance, une table associant une valeur de commande pour un courant électrique qui est appelé à circuler dans le moteur électrique (53) et une amplitude d'un couple de moteur l'une à l'autre pour chacune de plages d'amplitudes de la dérive, et fait référence à la table pour déterminer la valeur de commande pour le courant électrique requis pour générer le couple de moteur.

7. Le système d'assistance électrique (51) de la revendication 2, dans lequel une dérive courante à un moment courant t est représentée comme E(t), et des gains de réinjection utilisables pour trouver une valeur de commande pour un courant électrique à partir d'un terme de proportion, d'un terme d'intégration et d'un terme différentiel relatifs à une dérive résiduelle sont respectivement représentés comme Kp', Kd' et Ki',
le dispositif de commande (70) détermine la valeur de commande lm, pour le courant électrique qui est appelé à circuler dans le moteur électrique (53), par :

[Expression 2]

$$\mathrm{Im}(t) = Kp' \times e(t) + Ki' \times \int_0^t e(\tau)d\tau + Kd' \times \frac{de(t)}{dt}$$

.

8. Le système d'assistance électrique (51) de l'une quelconque des revendications 1 à 7, dans lequel le dispositif de commande (70) inclut un dispositif de stockage (77) conservant la règle préparée à l'avance.

9. Le système d'assistance électrique (51) de la revendication 8, dans lequel la règle est une association ou une fonction définissant la correspondance entre le signal de couple et l'accélération cible.

10. Le système d'assistance électrique (51) de la revendication 9, dans lequel la fonction est une fonction non linéaire ou une fonction linéaire.

11. Le système d'assistance électrique (51) de l'une quelconque des revendications 1 à 10, dans lequel le dispositif de commande (70) inclut un filtre passe-haut (73) transmettant un composant haute fréquence d'une fréquence prédéfinie ou supérieure qui est incluse dans le signal d'accélération reçu.

12. Le système d'assistance électrique (51) de la revendication 11, dans lequel le dispositif de commande (70) inclut un filtre passe-haut (73) transmettant un composant haute fréquence de 5 Hz ou supérieur.

13. Le système d'assistance électrique (51) de l'une quelconque des revendications 1 à 12, dans lequel au cours d'une période temporelle dans laquelle le cycliste fait tourner la pédale (55) pour effectuer une rotation de la manivelle (57), le signal de couple change conformément à la rotation de la manivelle (57) qui est associée à une opération du cycliste faisant tourner la pédale (55),

le signal d'accélération change conformément à l'opération du cycliste faisant tourner la pédale (55) et à une perturbation extérieure appliquée au véhicule à assistance électrique (1), et
le dispositif de commande (70), selon un minutage prédéfini, calcule l'accélération cible à partir du signal de couple, calcule l'accélération à partir du signal d'accélération et détermine l'amplitude de la puissance d'assistance à générer par le moteur électrique (53).

14. Le système d'assistance électrique (51) de l'une quelconque des revendications 1 à 13, comprenant en outre un circuit d'entraînement de moteur (79) produisant, vers le moteur électrique (53), un courant électrique présentant au moins une d'une amplitude, d'une fréquence et d'une direction de circulation contrôlées conformément à une valeur de commande,
dans lequel le dispositif de commande (70) produit, vers le circuit d'entraînement de moteur (79), une valeur de commande utilisable pour entraîner une circulation d'un courant électrique qui est conforme à l'amplitude déterminée de la puissance d'assistance.

**15.** Véhicule à assistance électrique (1), comprenant le système d'assistance électrique (51) de la revendication 14.

**16.** Le véhicule à assistance électrique (1) de la revendication 15, comprenant en outre :

une roue avant (25) et d'une roue arrière (26) ; et
un mécanisme de transmission de puissance (31) transmettant la puissance musculaire du cycliste et la puissance d'assistance à la roue arrière (26).

FIG.1

UP

REAR ← → FRONT

DOWN

*FIG.2A*

*FIG.2B*

EP 3 564 111 B1

FIG.3

*FIG.4*

*FIG.5A*

WIND

(a) TORQUE GENERATED AT CRANKSHAFT

(b) TARGET ACCELERATION BASED ON TORQUE

(c) ACCELERATION IN TRAVEL DIRECTION x OF VEHICLE

P-P(t)    P-P(t+1)    P-P(t+2)

En (t+1)

*FIG.5B*

FIG.6

TARGET
ACCELERATION

PEDAL FORCE
PROVIDED BY HUMAN

FIG.7

*FIG.8*

```
        ┌─────────────────────────┐
        │  AUTOMATIC ASSIST MODE  │
        │   SWITCHING PROCEDURE   │
        └─────────────────────────┘
                    │
                    ▼                        S10
              ╱─────────────╲
            ╱  AUTOMATIC ASSIST ╲
           ╱   MODE SWITCHING     ╲───────── No
           ╲    EFFECTIVE?        ╱
            ╲───────────────────╱
                    │ Yes            S11
                    ▼
        ┌───────────────────────────────────────┐
        │ RECEIVE ACCELERATION SIGNAL AND PROCESS│
        │ ACCELERATION SIGNAL WITH HIGH-PASS     │
        │ FILTER                                 │
        └───────────────────────────────────────┘
                    │                    S12
                    ▼
        ┌───────────────────────────────────────┐
        │ RECEIVE TORQUE SIGNAL AND REFER TO     │
        │ ACCELERATION CALCULATION RULE TO       │
        │ CALCULATE TARGET ACCELERATION          │
        └───────────────────────────────────────┘
                    │                    S13
                    ▼
        ┌───────────────────────────────────────┐
        │ CALCULATE MOTOR ELECTRIC CURRENT       │
        │ COMMAND VALUE BASED ON SELECTED ASSIST │
        │ MODE, PEDAL TORQUE AND TRANSMISSION    │
        │ GEAR RANGE                             │
        └───────────────────────────────────────┘
                    │                    S14
                    ▼
        ┌───────────────────────────────────────┐
        │ USE PID CONTROL TO FIND MOTOR TORQUE   │
        │ AND USE ELECTRIC CURRENT COMMAND VALUE │
        │ REQUIRED TO GENERATE MOTOR TORQUE TO   │
        │ CORRECT MOTOR ELECTRIC CURRENT COMMAND │
        │ VALUE                                  │
        └───────────────────────────────────────┘
                    │                    S15
                    ▼
        ┌───────────────────────────────────────┐
        │ FURTHER CORRECT MOTOR ELECTRIC CURRENT │
        │ COMMAND VALUE BASED ON VEHICLE SPEED   │
        │ AND CRANK ROTATION                     │
        └───────────────────────────────────────┘
                    │
```

FIG.9

(a) LOAD — C10 C11 C12 — NO HEADWIND — HEADWIND

(b) VEHICLE SPEED (NOT CONTROLLED) — ACCELERATING — CONSTANT SPEED — DECREASE OF SPEED DUE TO HEADWIND

(c) Gx (NOT CONTROLLED)

(d) TORQUE SIGNAL OUTPUT FROM CRANK ROTATION SENSOR — SAME PEDAL FORCE

(e) TARGET ACCELERATION (SOLID LINE)

(f) VEHICLE SPEED (SOLID LINE: CONTROLLED) (DASHED LINE: NOT CONTROLLED) — ACCELERATING — CONSTANT SPEED

*FIG.10*

(a) LOAD

C10  C11  C12

NOT INCLINED (FLAT ROAD)  INCLINED (SLOPE)

(b) VEHICLE SPEED (NOT CONTROLLED)

ACCELERATING  CONSTANT SPEED  DECREASE OF SPEED DUE TO INCLINATION

(c) Gx (NOT CONTROLLED)

(d) HIGH-PASS FILTER OUTPUT

(e) TORQUE SIGNAL OUTPUT FROM CRANK ROTATION SENSOR (NOT CONTROLLED)

(f) TORQUE SIGNAL OUTPUT FROM CRANK ROTATION SENSOR (CONTROLLED)

(g) TARGET ACCELERATION (SOLID LINE)

(h) VEHICLE SPEED (SOLID LINE: CONTROLLED) (DASHED LINE: NOT CONTROLLED)

ACCELERATING  CONSTANT SPEED

FIG.11A

M·G

M·G

FIG.11B

M·α

$\theta_0$

$\theta_0$

M·G·$\cos\theta_0$

M·G

M·G·$\sin\theta_0$

*FIG.12*

ACCELERATION
(SOLID LINE:
CONTROLLED)
(DASHED LINE:
NOT CONTROLLED)

*FIG.13*

**EP 3 564 111 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2711285 A1
- EP 0926059 A2

- JP 9226664 A